# EUROPÄISCHE PATENTSCHRIFT

(11) **EP 3 559 622 B1**
(45) Veröffentlichungstag und Bekanntmachung des Hinweises auf die Patenterteilung: **03.08.2022**
(21) Anmeldenummer: 17793956.8
(22) Anmeldetag: 06.11.2017
(51) Int. Cl.: G01L 9/00, G01L 19/06, G01L 23/10, B29C 64/00

(54) **VERFAHREN ZUR HERSTELLUNG EINES SENSORGEHÄUSES FÜR EINEN KRAFT- ODER DRUCKSENSOR SOWIE SENSORGEHÄUSE, KRAFT- ODER DRUCKSENSOR UND VERWENDUNG EINER ADDITIVEN FERTIGUNGSVORRICHTUNG**
METHOD FOR PRODUCING A SENSOR HOUSING FOR A POWER OR PRESSURE SENSOR AND SENSOR HOUSING, POWER OR PRESSURE SENSOR, AND USE OF AN ADDITIVE PRODUCTION DEVICE
PROCÉDÉ DE FABRICATION D'UN BOÎTIER DE CAPTEUR POUR UN CAPTEUR DE FORCE OU DE PRESSION AINSI QUE BOÎTIER DE CAPTEUR, CAPTEUR DE FORCE OU DE PRESSION ET UTILISATION D'UN DISPOSITIF DE FABRICATION ADDITIVE

(30) Priorität: 20.12.2016 DE 102016225652
(43) Veröffentlichungstag der Anmeldung: 30.10.2019
(73) Patentinhaber: Piezocryst Advanced Sensorics GmbH, 8020 Graz (AT)
(72) Erfinder: BAUMGARTNER, Martin, 8522 Gross St. Florian (AT); STRMSEK, Robert, 2327 Race (SI); KRÖGER, Dietmar, 8010 Graz (AT)
(74) Vertreter: Hahner, Ralph
(86) Internationale Anmeldenummer: PCT/EP2017/078277
(87) Internationale Veröffentlichungsnummer: WO 2018/114109

(56) Entgegenhaltungen:
- WO-A1-2011/147829
- CH-A1- 705 261
- DE-A1-102014 114 037
- US-A1- 2012 031 189

## Beschreibung

Die vorliegende Erfindung betrifft ein Verfahren zur Herstellung eines Sensorgehäuses für einen Kraft- oder Drucksensor, insbesondere zum Einsatz in einem Brennraum, sowie ein Sensorgehäuse für einen Kraft- oder Drucksensor, insbesondere zum Einsatz in einem Brennraum, einen Kraft- oder Drucksensor mit einem solchen Sensorgehäuse, insbesondere zum Einsatz in einem Brennraum, und die Verwendung einer additiven Fertigungsvorrichtung zur Herstellung eines solchen Sensorgehäuses, insbesondere zum Einsatz in einem Brennraum.

Aus dem Stand der Technik sind verschiedene Vorrichtungen zum Erfassen eines Drucks, insbesondere in einem Brennraum einer Hubkolbenmaschine, bekannt. Im Allgemeinen nimmt dabei eine Membran, welche mit dem Brennraum in Verbindung steht, den Druck unter Verformung auf. Ein Membranstempel, welcher Teil der Membran oder mit dieser verbunden ist, übermittelt diese Verformung bzw. den dazu proportionalen Druck an einen Druckwandler, welcher daraufhin dem Druck proportionale elektrische Signale erzeugt.

DE 11 2010 000 748 T5 betrifft das Messen von Druck durch einen einstückigen Drucksensoranschluss, welcher eine durch einen Kanal mit einem Diaphragma verbundene Öffnung aufweist. Die Öffnung ist dazu ausgebildet, eine Substanz durch den Kanal in Richtung des Diaphragmas zu leiten, wodurch eine mechanische Belastung auf das Diaphragma ausgeübt wird. Der Drucksensoranschluss ist aus einem einzelnen Stück Material gefertigt und hat keine Schweißnähte, Lötstellen oder Verbindungsstellen.

DE 10 2011 002 596 A1 betrifft einen Brennraumdrucksensor aufweisend ein Gehäuse mit einer Gehäuseöffnung, welche durch mindestens eine Membran abgedichtet ist. Dabei kann die Membran einstückig mit dem Gehäuse ausgebildet oder im Bereich der mindestens einen Gehäuseöffnung durch mindestens eine Fixierung, beispielsweise eine kraftschlüssige und/oder formschlüssige und/oder stoffschlüssige Verbindung, beispielsweise eine Schweißverbindung, mit dem Gehäuse verbunden sein. In einem Innenraum ist ein mechanisch-elektrisches Wandlerelement aufgenommen, welches eingerichtet ist, einen durch einen Stößel übertragenen Druck in einem Brennraum zu erfassen.

CH 705 261 A1 betrifft ein Verfahren zum Verbinden einer Membran an ein Gehäuse eines Druck- oder Kraftsensors, wobei zuerst eine erste Verbindung in einem inneren Bereich zwischen einer Gehäuseringfläche und einer Membranringfläche und anschließend eine zweite Verbindung zwischen der Gehäuseringfläche und der Membranringfläche hergestellt wird. Die erste Verbindung kann eine Lötung, eine Hartlötung, eine Schweißung, eine Widerstandsschweißung, ein Bonden oder ein Thermokompressionsbonden sein. Die zweite Verbindung kann eine Laserschweißung, eine ElektronenstrahlSchweißung, eine Schweißung nach dem Argonarc-Verfahren, eine Wolfram-Inertgasschweißung, eine Schutzgasschweißung oder ein Bonden sein.

Zusammenfassend kommen bei Herstellungsprozessen bekannter Sensorgehäuse insbesondere "klassische" Trenn- und/oder Fügeverfahren, etwa Bohren, Drehen, Fräsen, Schweißen und/oder Kleben etc., zum Einsatz.

WO 2016/045883 A1 betrifft ein Verfahren zur Herstellung einer kundenspezifischen Komponente eines Feldgeräts zur Bestimmung oder Überwachung zumindest einer Prozessgröße eines Mediums, wobei das Feldgerät in einem Prozess der Automatisierungstechnik eingesetzt wird, wobei die Komponente aus zumindest einem Material gefertigt wird, wobei das Material und, die Struktur und/oder die Form der Komponente anhand von digitalen Beschreibungsdaten vorgegeben wird, und wobei die Komponente entsprechend den vorgegebenen digitalen Beschreibungsdaten in einem 3D Druckverfahren hergestellt wird.

Es ist eine Aufgabe der Erfindung, ein einfaches und flexibles Verfahren zur Herstellung eines Sensorgehäuses für einen Drucksensor sowie ein verbessertes Sensorgehäuse und eine Verwendung einer additiven Fertigungsvorrichtung zur einfachen Herstellung eines Sensorgehäuses anzugeben, wobei insbesondere die Limitierungen der klassischen Trenn- und Fügeverfahren umgangen werden.

Diese Aufgabe wird durch das Verfahren zur Herstellung eines Sensorgehäuses für einen Kraft- oder Drucksensor, insbesondere zum Einsatz in einem Brennraum, einem Sensorgehäuse, insbesondere zum Einsatz in einem Brennraum, dem Kraft- oder Drucksensor, insbesondere zum Einsatz in einem Brennraum, sowie der Verwendung einer additiven Fertigungsvorrichtung gemäß der unabhängigen Ansprüche gelöst. Vorteilhafte Ausgestaltungen der Erfindung werden in den abhängigen Ansprüchen beansprucht. Die Lehre der Ansprüche wird hiermit zu einem Teil der Beschreibung gemacht.

Ein erster Aspekt der Erfindung betrifft ein Sensorgehäuse, nach Anspruch 1 insbesondere zum Einsatz in einem Brennraum, für einen Kraft- oder Drucksensor, welches einen metallischen Sensorkörper und ein Metallblech aufweist. Das Metallblech schließt den Sensorkörper vorzugsweise einseitig ab. Weiter vorzugsweise ist der Sensorkörper durch additive Fertigung auf das Metallblech aufgebracht und durch eine während der additiven Fertigung erzeugte, insbesondere flächige, stoffschlüssige Fügeverbindung mit dem Metallblech verbunden und das Metallblech bildet in einem durch den Sensorkörper begrenzten Bereich eine, insbesondere kreisringförmige, Membran bildet.

Vorzugsweise weist das Sensorgehäuse wenigstens einen metallischen Membranstempel auf, welcher mit dem Metallblech in Kontakt ist, wobei die Membran zwischen dem Sensorkörper und dem Membranstempel gebildet wird.

Weiter vorzugsweise ist der Membranstempel durch additive Fertigung auf das Metallblech aufgebracht und durch eine während der additiven Fertigung erzeugte, insbesondere flächige, stoffschlüssige Fügeverbindung mit dem Metallblech verbunden.

Ein zweiter Aspekt der Erfindung betrifft einen Drucksensor nach Anspruch 12, insbesondere zum Einsatz in einem Brennraum, mit einem Sensorgehäuse, gemäß dem ersten Aspekt der Erfindung.

Ein dritter Aspekt der Erfindung betrifft ein Verfahren zur Herstellung eines Sensorgehäuses nach Anspruch 13, insbesondere zum Einsatz in einem Brennraum, eines Kraft- oder Drucksensors wobei ein Metallblech bereitgestellt und ein Sensorkörper und/oder wenigstens ein Membranstempel auf dem Metallblech mittels additiver Fertigung aufgebracht wird. Die additive Fertigung erzeugt dabei eine stoffschlüssige, insbesondere flächige, Fügeverbindung zwischen dem Sensorkörper und/oder dem wenigstens einen Membranstempel einerseits und dem Metallblech andererseits.

Ein vierter Aspekt der Erfindung betrifft die Verwendung einer additiven Fertigungsvorrichtung zur Herstellung eines Sensorgehäuses eines Drucksensors nach Anspruch 14, insbesondere zum Einsatz in einem Brennraum, gemäß dem zweiten Aspekt der Erfindung.

Im Folgenden ist, wenn von einem Drucksensor gesprochen wird, auch immer ein, insbesondere baugleicher, Kraftsensor gemeint.

Ein Sensorkörper im Sinne der Erfindung ist ein Teil eines Sensorgehäuses, welcher wenigstens die Membran trägt. Der Sensorkörper begrenzt dabei einen Raum, welcher einen Innenraum des Sensorkörpers darstellt. Insbesondere spannt ein Sensorkörper wenigstens eine Öffnung auf, welche einem Druckraum, insbesondere einem Brennraum einer Hubkolbenmaschine zugewandt oder zuwendbar ist und bevorzugt durch die Membran verschlossen ist oder wird. Vorzugsweise weist der Sensorkörper wenigstens abschnittsweise die Form eines Hohlquaders oder Hohlzylinders auf, welcher weiter vorzugsweise an wenigstens einer der Stirnseiten offen ist. Weiter vorzugsweise ist der Sensorkörper dazu ausgebildet, im Inneren bzw. im durch den Hohlquader oder Hohlzylinder aufgespannten Innenraum zumindest einen Teil eines Membranstempels und zumindest einen Teil eines Druckwandlers, insbesondere eines piezoelektrischen Elements, aufzunehmen.

Ein Membranstempel im Sinne der Erfindung ist ein Bereich, in welchem eine Membran verstärkt ist. Der Membranstempel kann dabei durch die Membran selbst oder ein weiteres Element gebildet werden. Vorzugsweise kann die Membran im Bereich des Membranstempels durch zu erwartende Drücke eines Drucksensors nicht verformt werden.

Unter einem Metallblech im Sinne der Erfindung ist insbesondere ein flaches bzw. dünnes, im Wesentlichen ebenes Metallstück zu verstehen. Vorzugsweise weist das Metallblech eine kreisförmige Form auf, wobei sein Durchmesser bevorzug einem Durchmesser des, insbesondere ebenfalls kreisförmig, etwa als Hohlzylinder, ausgebildeten, Sensorkörpers entspricht. Vorzugsweise kann das Metallblech eine Metallfolie sein.

Eine additive Fertigung im Sinne der Erfindung betrifft das Erzeugen eines, insbesondere dreidimensionalen, Werkstückes aus einem oder mehreren Rohmaterialien, insbesondere aus Metallstaub, -pulver, -granulat, oder -draht. Vorzugsweise wird dabei das Rohmaterial sequenziell punktweise durch einen oder mehrere Fertigungsstrahlen, insbesondere räumlich hochauflösend, erhitzt oder gehärtet, insbesondere an- oder geschmolzen, wobei sich beim anschließenden Erstarren bzw. Aushärten ein einziger Festkörper bildet. Weiter vorzugsweise wird die Erhitzung durch einen oder mehrere fokussierte Laser- oder Elektronenstrahlen bewirkt. Das Rohmaterial wird dabei bevorzugt schichtweise aufgetragen und verarbeitet, so dass das Werkstück Stück für Stück, d.h. Schicht für Schicht, entsteht. Dadurch lassen sich vorteilhaft Werkstückstrukturen erzeugen, welche durch klassische Trennverfahren, etwa durch Bohren oder Fräsen, nicht realisierbar sind. Dies betrifft insbesondere sowohl die Formgebung der Werkstücke als auch den Detailgrad, d.h. die räumliche Auflösung.

Additive Fertigungsverfahren werden auch als generative Fertigung bezeichnet und betreffen insbesondere die Urformung eines herzustellenden Werkstücks.

Unter einer flächigen stoffschlüssigen Fügeverbindung im Sinne der Erfindung ist insbesondere eine Verbindung wenigstens zweier Elemente zu verstehen, welche die zwei Elemente kontinuierlich, zumindest aber an mehreren, insbesondere einer Vielzahl von, Verbindungspunkten, miteinander verbindet. Die Verbindungspunkte können dabei auch mikroskopisch oder mesoskopisch ausgebildet sein, d.h. eine mikroskopische oder mesoskopische räumliche Ausdehnung aufweisen. Insbesondere können die Verbindungspunkte dabei in einem im Wesentlichen regelmäßigen Muster oder unregelmäßig angeordnet sein. Sowohl die Verteilung als auch die räumliche Ausdehnung der der Verbindungspunkte muss dabei nicht homogen sein, d.h. in einem Bereich der Verbindung können die Verbindungspunkte klein und eng, in einem anderen Bereich dagegen groß und weit voneinander entfernt ausgebildet bzw. angeordnet sein.

Ein Brennraum im Sinne der Erfindung ist ein vorzugsweise geschlossener Raum, in welchem ein brennbares Arbeitsmedium, etwa ein Gas oder ein Pulver, insbesondere als Teil eines Arbeitszyklus, verbrannt wird. Die Verbrennung kann dabei insbesondere explosionsartig oder mit offener Flamme stattfinden. Bevorzugt ist unter einem Brennraum ein Brennraum einer Verbrennungskraftmaschine, insbesondere eines Hubkolbenmotors, zu verstehen. Vorteilhaft kann ein Brennraum aber auch als Brennkammer einer Gasturbine oder eines Strahltriebwerks, als Verbrennungskammer, insbesondere einer Dampflokomotive, oder als Feuerraum, insbesondere eines Heizkraftwerks, ausgebildet sein.

Die Erfindung basiert insbesondere auf dem Ansatz, einen, insbesondere metallischen, Sensorkörper und/oder einen, insbesondere metallischen, Membranstempel auf ein bereitgestelltes Metallblech aufzubringen. Insbesondere werden der Sensorkörper und/oder der Membranstempel direkt auf dem Metallblech, etwa durch additive Fertigung, erzeugt. In anderen Worten wird direkt auf dem Metallblech eine Urformung des Sensorkörpers und/oder des Membranstempels vorgenommen. Dadurch wird eine stoffschlüssige, insbesondere flächige, Fügeverbindung zwischen Sensorkörper und/oder Membranstempel einerseits und Metallblech andererseits erzeugt. Vorzugsweise verbindet sich dabei das Metallblech, insbesondere dessen Oberfläche, mit dem Material, insbesondere Metall, aus welchem der Sensorkörper und/oder der Membranstempel additiv gefertigt wird. Dadurch bildet das Metallblech zwischen dem Sensorkörper und dem Membranstempel eine Membran, die vorteilhafte elastische Eigenschaften aufweist. Insbesondere bildet das Metallblech eine Membran, deren Fläche auch bei Verformung, insbesondere Auslenkung, zumindest im Wesentlichen konstant bleibt, so dass die Verformung der Membran zumindest im Wesentlichen proportional zu einem in einem Druckraum, insbesondere Brennraum einer Hubkolbenmaschine, wirkenden Druck ist und/oder bleibt. Insbesondere bleibt ein Druck-Kraft-Verhältnis der Membran zumindest im Wesentlichen konstant. Dadurch ist die Druckmessung durch den Sensor besonders zuverlässig.

Zudem kann auf Schweißnähte vollständig oder zumindest größtenteils verzichtet werden, wodurch insbesondere die elastischen Eigenschaften der Membran positiv oder zumindest nicht, insbesondere nicht negativ, beeinflusst werden. Insbesondere wird vermieden, dass eine oder mehrere Schweißnähte eine Verformung und/oder eine Verspannung und/oder eine Verzerrung des Sensorkörpers durch Erhitzung bzw. sich zusammenziehendes Material oder Veränderung der Materialeigenschaften bei dem Schweißvorgang bewirken. Zudem dichtet die stoffschlüssige, insbesondere flächige, Fügeverbindung einen Innenraum des Sensorkörpers, in welchem insbesondere ein Druckwandler zur Wandlung des von dem Membranstempel aufgenommenen Drucks in elektrische Signale angeordnet ist, gegen den außenliegenden Druckraum besonders zuverlässig gasdicht ab.

Durch die erfindungsgemäßen Fertigungsverfahren für Sensorgehäuse und die neuartigen Sensorgehäuse können insbesondere Limitierungen klassischer Trenn- und/oder Fügeverfahren, insbesondere hinsichtlich Formgebung und/oder Detailgrad bei den Trennverfahren und/oder Beeinflussung elastischer Eigenschaften bei den Fügeverfahren, wenigstens im Bereich der Membran überkommen werden.

Vorzugsweise weist das Metallblech eine Stärke von etwa 0,05 mm bis 0,3 mm, bevorzugt etwa 0,075 mm bis 0,2 mm, insbesondere etwa 0,1 mm, auf. Dadurch kann der Sensorkörper und/oder der Membranstempel durch additive Fertigung zuverlässig auf das Metallblech aufgebracht werden, wobei das Metallblech zwischen Sensorkörper und Membranstempel eine, insbesondere flexible, Membran bildet. Vorzugsweise verformt bzw. bewegt sich die Membran, insbesondere in einem Bereich am Membranstempel, bei Aufnahme eines Drucks um etwa 3 bis 15 µm, bevorzugt etwa 4 bis 10 µm, insbesondere etwa 4,5 µm. Insbesondere beträgt dabei die Auslenkung des Membranstempels durch die sich verformende bzw. bewegende Membran vorzugsweise etwa 3 bis 15 µm, bevorzugt etwa 4 bis 10 µm, insbesondere etwa 4,5 µm.

Insgesamt erlaubt die Erfindung die einfache und flexible Verbindung eines Sensorkörpers und/oder eines Membranstempels mit einem Metallblech, so das ein, zumindest gegenüber einem Druckraum, insbesondere einem Brennraum, besonders gasdichtes Sensorgehäuse erzeugt wird, dessen Membran vorteilhafte elastische Eigenschaften aufweist.

Vorzugsweise weisen der Drucksensor bzw. das Sensorgehäuse bzw. der Sensorkörper bzw. der Membranstempel eine Längsachse auf. Entsprechend werden im Folgenden Richtungen entlang der Längsachse X als "axiale Richtungen" und Richtungen senkrecht zur Längsachse X als "radiale Richtungen" bezeichnet. Der Drucksensor bzw. das Sensorgehäuse bzw. der Sensorkörper bzw. der Membranstempel ist oder wird bevorzugt, zumindest im Wesentlichen, rotationssymmetrisch bezüglich der Längsachse ausgebildet.

In einer bevorzugten Ausführung ist das, insbesondere bereitgestellte, Metallblech durch ein Trenn- oder Umformverfahren, insbesondere durch Drehen oder Schmieden, hergestellt. Vorzugsweise weist das Metallblech den Membranstempel auf. Insbesondere ist das Metallblech mit dem Membranstempel, insbesondere durch ein Trennverfahren, besonders bevorzugt durch Drehen oder elektrochemisches Abtragen (ECM), einstückig hergestellt.

In einer weiteren bevorzugten Ausbildung wird das Metallblech während des additiven Fertigens zumindest teilweise, insbesondere an wenigstens einer Oberfläche, aufgeschmolzen. Vorzugsweise wird dies von einem oder mehreren, insbesondere fokussierten, Laser- oder Elektronenstrahlen bewirkt, welche das Metallblech, insbesondere an wenigstens einer Oberfläche, abrastern. Das, bevorzugt ebenfalls durch den Laser- oder Elektronenstrahl aufgeschmolzene, Rohmaterial, insbesondere Metall, aus welchem der Sensorkörper und/oder der Membranstempel erzeugt werden, kann sich dadurch beim Erkalten bzw. Verfestigen besonders vorteilhaft mit dem Metallblech verbinden. Insbesondere wird dadurch eine stoffschlüssige, insbesondere flächige, Fügeverbindung zwischen dem Sensorkörper und/oder Membranstempel einerseits und dem Metallblech andererseits erzeugt. Dies gewährleistet eine äußerst zuverlässige Gasdichtigkeit der Verbindung und beeinträchtigt nicht die elastischen Eigenschaften einer zwischen dem Sensorkörper und dem Membranstempel ausgebildeten Membran.

In einer weiteren bevorzugten Ausführung werden die Außenseiten des Sensorkörpers und/oder des Membranstempels bei der additiven Fertigung mit einer höheren Auflösung, d.h. mit einem höheren Detailgrad, hergestellt, insbesondere mit dem Metallblech verbunden, als in dem von den Außenseiten begrenzten Volumen bzw. Bereich. Dadurch kann die Effizienz der additiven Fertigung erhöht werden.

Erfindungsgemäß wird während des additiven Fertigens wenigstens ein, insbesondere gewundener, Hohlraum im Sensorkörper und/oder Membranstempel gebildet. Vorzugsweise wird ein an eine Form des Sensorkörpers und/oder Membranstempels angepasster Hohlraum gebildet. Der Hohlraum kann verschiedene Funktionen erfüllen, insbesondere als Kühlkanal, zur Materialeinsparung, zur Ausbildung vorgegebener elastischer Eigenschaften, als Zuleitung eines Arbeitsmediums und/oder als Aufnahme weiterer Komponenten des Sensorgehäuses bzw. Drucksensors dienen bzw. ausgebildet sein. In einer Ausführung ist der Hohlraum als Ausnehmung bzw. Sackloch ausgebildet. In einer alternativen Ausführung ist der Hohlraum vollständig geschlossen. Durch die additive Fertigung ist es besonders einfach, einen solchen Hohlraum zu bilden, insbesondere im Rahmen des additiven Fertigens des Sensorkörpers und/oder Membranstempels. Insbesondere kann der Hohlraum auch derart geformt sein, dass er mit klassischen Trennverfahren, insbesondere Bohren und/oder Fräsen, nicht zu erzeugen ist.

In einer weiteren bevorzugten Ausführung werden während des additiven Fertigens anfallende Rückstände aus dem wenigstens einen Hohlraum über eine Bohrung oder einen während des additiven Fertigens gebildeten Zugangskanal, insbesondere durch Ausspülen oder durch Ausblasen, entfernt. Dabei kann der Zugangskanal gewunden, insbesondere an die Form des Sensorkörpers und/oder des Membranstempels angepasst, sein. Dadurch wird eine zuverlässige Entfernung der Rückstände gewährleistet. Vorzugsweise kann der Zugangskanal nach dem Entfernen der Rückstände, insbesondere im Betrieb des Drucksensors, als Zu- und/oder Ableitung, insbesondere für ein Kühlmedium, verwendet werden.

In einer weiteren bevorzugten Ausführung weist das Metallblech einerseits und der Sensorkörper und/oder der wenigstens eine Membranstempel andererseits verschiedene Materialien auf. Vorzugsweise besteht der Sensorkörper und/oder der wenigstens eine Membranstempel aus einem steifen, robusten Material, um Verformungen zu vermeiden und/oder wirkende Kräfte, insbesondere aufgenommenen Druck, verlustfrei, insbesondere an einen Druckwandler, übermitteln zu können. Alternativ oder zusätzlich besteht das Metallblech aus einem weichen, elastischen Material, so dass eine elastische Membran , insbesondere mit besonders vorteilhaften elastischen Eigenschaften, zwischen dem Sensorkörper und dem wenigstens einen Membranstempel gebildet wird, welche proportional zu einem einwirkenden Druck verformt bzw. ausgelenkt wird bzw. werden kann.

In einer weiteren bevorzugten Ausführung weist das Metallblech wenigstens zwei verschiedene Materialien auf. Vorzugsweise ist das Metallblech, insbesondere mit einem Film, beschichtet. Weiter vorzugsweise ist diese Beschichtung dazu eingerichtet, in einem Bereich der Membran einwirkende Wärme, insbesondere aus einem Brennraum einer Hubkolbenmaschine, derart zu dämmen bzw. abzuleiten, dass eine Verformung bzw. eine Änderung der elastischen Eigenschaften der Membran durch Wärmeeinwirkung vermieden oder zumindest vermindert wird.

In einer weiteren bevorzugten Ausführung weist das Metallblech in dem wenigstens einen Bereich, in welchem es mittels einer stoffschlüssigen Fügeverbindung mit dem Sensorkörper und/oder dem Membranstempel verbunden ist, ein starres Teilstück und in dem Bereich der Membran ein flexibles Teilstück auf. Dadurch kann das Metallblech besonders zuverlässig mit dem Sensorkörper und/oder dem Membranstempel, insbesondere verzerrungsfrei, verbunden werden, wobei es in dem Bereich der Membran trotzdem sehr gute elastische Eigenschaften zur Aufnahme eines Drucks aufweist.

Vorzugsweise weist das Metallblech in dem wenigstens einen Bereich, in welchem es mittels einer stoffschlüssigen, insbesondere flächigen, Fügeverbindung mit dem Sensorkörper und/oder dem Membranstempel verbunden ist, ein starres Material und/oder eine erste Blechstärke auf. Weiter vorzugsweise weist das Metallblech in dem Bereich der Membran ein elastisches Material und/oder eine zweite Blechstärke auf, wobei die erste Blechstärke stärker ist als die zweite Blechstärke. Bevorzugt gehen das starre Material und das elastische Material und/oder die erste Blechstärke und die zweite Blechstärke kontinuierlich ineinander über. In anderen Worten nimmt die Konzentration des starren Materials und/oder die Blechstärke im Bereich der stoffschlüssigen Fügeverbindung mit dem Sensorkörper und/oder dem Membranstempel zu, während die Konzentration des elastischen Materials abnimmt. Umgekehrt nimmt die Konzentration des starren Materials und/oder die Blechstärke im Bereich der Membran ab, während die Konzentration des elastischen Materials zunimmt. Dadurch können besonders vorteilhafte elastische Eigenschaften des Metallblechs bewirkt werden. Insbesondere wird vermieden, dass Verzerrungen oder Spannungen im Bereich der stoffschlüssigen Fügeverbindung auftreten oder sich in einen Bereich der Membran, insbesondere in die Membran, fortpflanzen. Insbesondere wird ein Druck-Kraft-Verhältnis der Membran konstant gehalten.

In einer weiteren bevorzugten Ausführung ist das Metallblech zumindest teilweise, insbesondere in einem Bereich der Membran, insbesondere im Wesentlichen in einer sich radial erstreckenden Ebene, wellen-, bogen- oder buckelförmig ausgebildet und dazu eingerichtet, sich bei Aufnahme von Wärme zu im Wesentlichen gleichen Teilen in beide Seiten der Ebene, d.h. in axialer Richtung, auszudehnen. Insbesondere sind die wellen-, bogen- oder buckelförmigen Bereiche des Metallblechs dazu eingerichtet, Wärme aufzunehmen bzw. sich bei Aufnahme von Wärme, insbesondere in axialer Richtung, zu verformen. Dadurch wird eine Verformung des Metallblechs aus der radialen Ebene heraus, insbesondere eine Auslenkung des mit dem Metallblech verbundenen Membranstempels, vermieden.

In einer weiteren Ausführung weist der Sensorkörper und/oder der Membranstempel wenigstens einen Kühlkanal auf, welcher während der additiven Fertigung des Sensorkörpers und/oder des Membranstempels gebildet wird. Während der additiven Fertigung ist es besonders einfach, vorgegebene Bereiche des Sensorkörpers und/oder des Membranstempels von der Bearbeitung durch einen Fertigungsstrahl auszunehmen, so dass entsprechende Hohlräume erzeugt werden. Bei Durchfluss dieser Hohlräume, insbesondere der Kühlkanäle, mit einem Kühlmedium kann ein Temperaturanstieg des Sensorgehäuses vorteilhaft vermieden oder zumindest vermindert werden, indem Wärme, welche insbesondere durch Prozesse in einem Brennraum einer Hubkolbenmaschine erzeugt wird, abgeführt wird. Dadurch wird sichergestellt, dass die Verformung, insbesondere Auslenkung, der Membran proportional zum aufgenommenen Druck bleibt.

In einer weiteren bevorzugten Ausführung ist der wenigstens eine Kühlkanal einer Form des Sensorkörpers entsprechend, insbesondere kreisförmig, ausgebildet und verläuft vorzugsweise wenigstens im Wesentlichen parallel zu dem Metallblech. Insbesondere verläuft der wenigstens eine Kühlkanal kreisförmig um die von dem Metallblech gebildete Membran herum. Dadurch kann, insbesondere durch eine Beschichtung des Metallblechs abgeleitete, Wärme besonders zuverlässig von einem durch den wenigstens einen Kühlkanal fließenden Kühlmedium abgeführt werden. Diese Ausführung ist nicht oder zumindest nur mit sehr viel Aufwand durch klassische Trennverfahren, insbesondere Bohren und/oder Fräsen, zu erreichen.

In einer weiteren bevorzugten Ausführung verläuft der wenigstens eine Kühlkanal spiralförmig in dem Sensorkörper. Dadurch kann Wärme aus einem besonders großen Volumen abtransportiert und die Temperatur insbesondere in einem Innenraum des Sensorkörpers besonders zuverlässig reguliert werden.

In einer weiteren bevorzugten Ausführung weist das Sensorgehäuse ein Thermoschutzelement auf, welches durch additive Fertigung stoffschlüssig mit dem Sensorkörper und/oder dem Membranstempel verbunden und auf einer einem Druckraum zuwendbaren Seite des Sensorkörpers und/oder des Membranstempels und/oder der Membran angeordnet ist. Durch die additive Fertigung lässt sich das Thermoschutzelement insbesondere ohne Schweißnaht, welche die elastischen Eigenschaften der Membran negativ beeinflussen würde, stoffschlüssige mit dem Sensorkörper und/oder dem Membranstempel verbinden. Auch lassen sich hierdurch Hohlräume in einem ansonsten nach außen geschlossenen Thermoschutzelement verwirklichen. Bevorzugt ist das Thermoschutzelement als druckraumseitige Außenhaut des Sensorkörpers und/oder des Membranstempels und/oder der Membran ausgebildet.

Vorzugsweise ist das Thermoschutzelement dazu eingerichtet, bei Prozessen in einem Druckraum, insbesondere einem Brennraum einer Hubkolbenmaschine, entstehende Wärme aufzunehmen und/oder abzuleiten und dadurch das Einwirken der Wärme insbesondere auf die Membran zu vermeiden oder zumindest zu vermindern. Weiter vorzugsweise ist das Thermoschutzelement dazu eingerichtet und/oder ausgebildet, insbesondere derart geformt, sich bei Einwirken von Wärme, etwa bei einem Thermoschock, entlang seiner Oberfläche, insbesondere in radialer Richtung auszudehnen. Alternativ oder zusätzlich ist das Thermoschutzelement dazu eingerichtet, sich senkrecht zu seiner Oberfläche, insbesondere in axialer Richtung, auszudehnen. Bevorzugt ist das Thermoschutzelement auch dazu eingerichtet, die Wärme auch bei einer plötzlichem, insbesondere nichtlinearen, Wärmeeinwirkung, etwa bei einem Thermoschock, aufzunehmen bzw. abzuführen und/oder sich entlang seiner Oberfläche, insbesondere radial, und/oder senkrecht zu seiner Oberfläche, insbesondere axial, auszudehnen.

Ein Thermoschock im Sinne der Erfindung betrifft das schnelle, schockartige Einwirken von Wärme, insbesondere Hitze, auf ein Werkstück. Wenn keine entsprechenden Vorkehrungen getroffen werden, erhöht sich dadurch die Temperatur des Werkstücks ebenfalls schnell bzw. schockartig, insbesondere nichtlinear, was insbesondere zu mechanischen Spannungen und/oder Verzerrungen und/oder (elastischen) Verformungen des Werkstücks führen kann. Ein Thermoschock wird etwa durch die Verbrennung eines Kraftstoffs in einer Brennkammer einer Hubkolbenmaschine bewirkt.

Das Thermoschutzelement ist bevorzugt derart mit dem Sensorkörper und/oder dem Membranstempel stoffschlüssig verbunden, dass eine Ausdehnung des Thermoschutzelements entlang seiner Oberfläche, insbesondere in radialer Richtung, keine Verzerrungen oder Spannungen in dem Sensorkörper und/oder dem Membranstempel bewirkt. Insbesondere ist das Thermoschutzelement vorzugsweise in radialer Richtung mit wenigstens einem druckraumseitigen, insbesondere in den Druckraum hineinragenden, Vorsprung des Sensorkörpers und/oder Membranstempels verbunden. Weiter vorzugsweise ist die Verbindung zu Sensorkörper und/oder Membranstempel symmetrisch bezüglich des wenigstens einen Vorsprungs des Sensorkörpers und/oder des Membranstempels ausgebildet. Dadurch wird das Übertragen von thermisch bedingten Verformungen des Thermoschutzelements auf den Sensorkörper und/oder den Membranstempel, insbesondere eine wärmebedingte Bewegung des Membranstempels, besonders zuverlässig vermieden.

In einer weiteren bevorzugten Ausführung weist das Thermoschutzelement Schlitze und/oder Löcher auf, durch die ein Druck wirken bzw. sich eine Druckwelle ausbreiten kann. Vorzugsweise ist das Thermoschutzelement dabei einseitig an einer einem Druckraum zuwendbaren Seite des Sensorkörper und/oder des Membranstempel und/oder der Membran angeordnet und überspannt den radialen Querschnitt des Sensorkörpers und/oder des Membranstempels und/oder der Membran. Dadurch wird eine Erwärmung von Sensorkörper und/oder Membranstempel und/oder Membran, insbesondere eine wärmebedingte Bewegung des Membranstempels, besonders zuverlässig vermieden oder zumindest vermindert.

In einer weiteren bevorzugten Ausführung ist das Thermoschutzelement mittels, insbesondere additiv gefertigter, vorzugsweise flexibler Verbindungsmittel stoffschlüssig und/oder thermisch leitend mit dem Sensorkörper und/oder dem Membranstempel verbunden. Vorzugsweise sind die Verbindungsmittel als, insbesondere dünne, Stege und/oder Säulen und/oder Gerüst ausgebildet. Weiter vorzugsweise sind die Verbindungsmittel dazu eingerichtet, das Thermoschutzelement von dem Sensorkörper und/oder dem Membranstempel und/oder der Membran zu beabstanden und/oder das Thermoschutzelement zu tragen. Dadurch wirkt das Thermoschutzelement, wie in den Ausführungen zuvor beschrieben, besonders zuverlässig.

Bevorzugt werden die flexiblen Verbindungsmittel während der additiven Fertigung durch Hohlräume definiert, die zwischen den Verbindungsmitteln angeordnet sind. Dadurch können die Verbindungsmittel nach statischen bzw. funktionellen Gesichtspunkten angeordnet werden. Insbesondere spielen die Limitierungen klassischer Fertigungsmethoden, insbesondere Bohren und/oder Fräsen, bei der Anordnung der Verbindungsmittel keine Rolle.

In einer weiteren bevorzugten Ausführung ist das Thermoschutzelement ein Teil des Sensorkörpers und/oder des Membranstempels und wird bevorzugt über wenigstens einen Hohlraum in dem Sensorkörper und/oder dem Membranstempel definiert. Vorzugsweise wird das Thermoschutzelement durch mehrere Hohlräume, die zwischen den Verbindungsmitteln angeordnet sind, definiert bzw. von dem Sensorkörper und/oder dem Membranstempel abgegrenzt. Dadurch kann das Thermoschutzelement besonders einfach im Rahmen einer additiven Fertigung, insbesondere während dem Aufbringen des Sensorkörpers und/oder des Membranstempels auf das Metallblech, erzeugt werden.

Die flexiblen Verbindungsmittel können in einer weiteren bevorzugten Ausführung dazu eingerichtet sein, von dem Thermoschutzelement aufgenommene Wärme über den Sensorkörper und/oder den Membranstempel abzuleiten. Dadurch kann eine Verformung des Thermoschutzelements bei Wärmeeinwirkung, welche Auswirkungen auf den Sensorkörper und/oder dem Membranstempel und/oder die Membran hätte, insbesondere deren Verformung und/oder Verspannung und/oder Verzerrung und/oder deren Bewegung, zuverlässig vermieden werden. Besonders bevorzugt wird die an den Sensorkörper und/oder den Membranstempel abgeleitete Wärme von einem Kühlmedium in einem Kühlkanal aufgenommen und abgeführt.

In einer weiteren bevorzugten Ausführung bildet die Membran zusammen mit wenigstens einem Abschnitt des Sensorkörpers ein Thermoschutzelement, des Weiteren wobei das Sensorgehäuse des Weiteren eine Stützstruktur aufweist und wobei das Metallblech, insbesondere im Bereich der Membran mittels, insbesondere additiv gefertigter, vorzugsweise starrer Verbindungsmittel oder mittels eines Koppelmediums mit der Stützstruktur wirkverbunden ist. Vorzugsweise sind die starren Verbindungsmittel als, insbesondere dünne, Säulen und/oder Stege und/oder Gerüst ausgebildet und dazu eingerichtet, das Thermoschutzelement von dem Metallblech zu beabstanden und/oder das Thermoschutzelement zu tragen. Weiter vorzugsweise ist das Koppelmedium und/oder die starren Verbindungsmittel wärmenichtleitend, insbesondere wärmeisolierend, eingerichtet, so dass ein Wärmestrom von dem Thermoschutzelement insbesondere auf das Metallblech und eine damit verbundene Änderung des Druck-Kraft-Verhältnisses der Membran zuverlässig vermieden wird. Durch die Wirkverbindung wird jedoch eine Bewegung der Membran, welche aus einer an der Membran anliegenden Kraft oder einem Druck resultiert, die/der gemessen werden soll, an die Stützstruktur weitergeben werden.

Durch die additive Fertigung lässt sich das Thermoschutzelement insbesondere ohne Schweißnaht, welche die elastischen Eigenschaften der Membran negativ beeinflussen würde, stoffschlüssige mit dem Sensorkörper und/oder dem Membranstempel verbinden.

Vorzugsweise weist das Metallblech eine geringere Membranstärke als die Stützstruktur auf, so dass die Membran einwirkende Wärme stärker aufnimmt als die Stützstruktur, und sich insbesondere bei Einwirken von Wärme, etwa bei einem Thermoschock, schneller bzw. leichter verformt. Dadurch kann ein Einwirken von Wärme auf die Stützstruktur zuverlässig vermieden werden. Zudem kann sich das als Membran ausgebildete Thermoschutzelement leichter verformen, ohne Spannungen und/oder Verzerrungen in der Stützstruktur, insbesondere über starre Verbindungsmittel, oder eine Bewegung des mit der Membran verbunden Membranstempels zu erzeugen.

In einer weiteren bevorzugten Ausführung wirkt eine Wirkverbindung ausschließlich in radialer Richtung, d.h. im Wesentlichen senkrecht zu einer Längsachse des Sensorgehäuses. Vorzugsweise kann sich das Thermoschutzelement dadurch bei Aufnahme von Wärme, insbesondere bei einem Thermoschock, verformen, ohne dass dabei eine Verformung des über starre Verbindungsmittel mit dem Thermoschutzelement verbundenen Elemente, insbesondere des Metallblechs bzw., der Membran und/oder des Sensorkörpers, bewirkt wird.

Weiter vorzugsweise ist das Thermoschutzelement dazu eingerichtet, sich bei Aufnahme von Wärme, insbesondere bei einem Thermoschock, wellen- oder bogenartig zu verformen, wobei die starren Verbindungsmittel bevorzugt an Knotenpunkten des wellen- oder bogenartig verformten Thermoschutzelements angeordnet sind.

In einer weiteren bevorzugten Ausführung ist die Stützstruktur mit dem Membranstempel in Kontakt. Hierdurch kann ein Impuls von der Membran über die Stützstruktur auf den Membranstempel übertragen werden. Vorzugsweise wirkt eine Verformung, insbesondere Auslenkung, der Membran in axialer Richtung auf den Membranstempel. Insbesondere bedingt eine Verformung, insbesondere Auslenkung, eine entsprechende Auslenkung des Membranstempels.

In einer weiteren bevorzugten Ausführung ist der Sensorkörper und/oder der Membranstempel (4) durch additive Fertigung auf die Stützstruktur (17) aufgebracht und durch eine während der additiven Fertigung erzeugte, insbesondere flächige, stoffschlüssige Fügeverbindung (9) mit der Stützstruktur (5) verbunden.. Vorzugsweise die weitere Membran dabei wenigstens auf einer Seite durch eine stoffschlüssige, insbesondere flächige, Fügeverbindung mit dem Sensorkörper und/oder die Membranstempel verbunden.

In einer weiteren bevorzugten Ausführung ist das Koppelmedium dazu eingerichtet, vom Thermoschutzelement aufgenommene Wärme, insbesondere bei einem Thermoschock, aufzunehmen und insbesondere derart weiterzuleiten, dass sich das bevorzugt mit dem Koppelmedium in Kontakt befindliche Metallblech, insbesondere die Membran, entsprechend, insbesondere spiegelsymmetrisch zu, der Stützstruktur verformt. In anderen Worten verformen sich die Membran und Stützstruktur in entgegengesetzten Richtungen. Aufgrund der bevorzugten stoffschlüssigen Fügeverbindung mit dem Membranstempel heben sich dabei durch die Verformung auf den Membranstempel wirkende Kräfte, insbesondere in axialer Richtung, auf, so dass eine wärmebedingte Bewegung des Membranstempels vermieden wird.

In einer weiteren bevorzugten Ausführung verschließt das Metallblech und/oder die Stützstruktur das Sensorgehäuse, insbesondere den Sensorkörper, gasdicht. Dadurch ist sichergestellt, dass ein auf das Metallblech und/oder die Stützstruktur einwirkender Druck vollständig oder zumindest nahezu vollständig von dieser aufgenommen und bevorzugt in eine Verformung bzw. Auslenkung umgesetzt wird.

In einer weiteren bevorzugten Ausführung weist das Sensorgehäuse wenigstens zwei Membranstempel und wenigstens einen weiteren Druckwandler auf, wobei das Metallblech zwischen dem Sensorkörper und den wenigstens zwei Membranstempeln wenigstens zwei, insbesondere kreisringförmige, Membranen ausbildet. Vorzugsweise wird der Sensorkörper mittels additiver Fertigung derart ausgebildet, dass die wenigstens zwei Membranstempel und die entsprechende Anzahl Druckwandler nebeneinander auch auf engstem Raum, etwa in einer Bohrung in einem Brennraum einer Hubkolbenmaschine oder in einem Zylinderkopf, angeordnet werden können. Bevorzugt wird der Sensorkörper mittels additiver Fertigung derart miniaturisiert, dass eine vergleichbare Fertigung mittels klassischer Trennverfahren, insbesondere Bohren und/oder Fräsen und/oder Drehen, nicht möglich ist. Durch die wenigstens zwei Membranstempel und die entsprechende Anzahl an Druckwandlern kann ein Druck, besondere im Brennraum einer Hubkolbenmaschine, besonders zuverlässig erfasst werden, da mittels der jeweiligen Paare aus Membranstempel und Druckwandler redundante Messungen ausgeführt und daher die jeweilige Messergebnisse abgeglichen bzw. überprüft werden können.

In einer weiteren bevorzugten Ausführung weist das Metallblech im Bereich der Membran wärmeleitende und/oder versteifende, insbesondere additiv gefertigte, Membranstrukturen auf, welche durch eine während der additiven Fertigung erzeugte stoffschlüssige Fügeverbindung mit dem Metallblech verbunden sind. Vorzugsweise sind die Membranstrukturen in radialer Richtung, kreisförmig oder zumindest kreissegmentförmig, wellenförmig, fächerförmig und/oder zick-zack-förmig oder in einer anderen Geometrie oder auch zufällig angeordnet. Dabei können die Membranstrukturen in diesen Anordnungen sowohl unterschiedliche als auch eine oder mehrere vorgegebene Längen aufweisen. Bevorzugt sind die Membranstrukturen dazu eingerichtet, von dem Metallblech, insbesondere von einer Beschichtung des Metallblechs, aufgenommene Wärme aufzunehmen und insbesondere zu einem äußeren Rand des Metallblechs, insbesondere der von dem Metallblech gebildeten Membran, besonders bevorzugt zu einem Thermoschutzelement und/oder einem Kühlkanal, zu leiten, wodurch eine Verformung und/oder Verzerrung und/oder Verspannung der Membran, insbesondere eine Bewegung des mit der Membran verbundenen Membranstempels, vermieden wird. Vorzugsweise sind die Membranstrukturen dabei nicht rotationssymmetrisch ausgebildet.

In einer weiteren bevorzugten Ausführung weist das Sensorgehäuse in axialer Richtung einen eckigen, insbesondere rechteckigen oder quadratischen, Querschnitt auf, wobei die Membran (wenigstens im Wesentlichen die Form des Querschnitts aufweist.

Hierdurch kann die Fläche der Membran und damit die Empfindlichkeit des Sensors in verschiedenen Einbausituationen wesentlich verbessert werden.

In einer weiteren bevorzugten Ausführung weist das Metallblech wenigstens im Bereich der Membran eine Krümmung, welche nicht rotationssymmetrisch, insbesondere in Bezug auf eine Längsachse des Sensorgehäuses, ist, auf.

Durch die Krümmung kann die Oberfläche zu dem zu messenden Raum an die Kontur der Umgebung angepasst werde, beispielsweise an den Verlauf einer Brennraumwandung.

Die im Vorhergehenden ausgeführten Merkmale und Vorteile in Bezug auf den ersten Aspekt der Erfindung gelten auch für den zweiten, dritten und vierten Aspekt der Erfindung entsprechend sowie, wo technisch sinnvoll, auch umgekehrt.

Die Erfindung wird im Folgenden an Hand von nicht einschränkenden Ausführungsbeispielen, die in den Figuren dargestellt sind, näher erläutert. Darin zeigen wenigstens teilweise schematisch:
- Fig. 1: einen Drucksensor mit einem ersten Ausführungsbeispiel eines erfindungsgemäßen Sensorgehäuses im Querschnitt;
- Fig. 2: Teilansichten mehrerer Anordnungsbeispiele eines Metallblechs und/oder eines Sensorkörpers und/oder eines Membranstempels im Querschnitt;
- Fig. 3: eine Teilansicht eines zweiten Ausführungsbeispiels eines erfindungsgemäßen Sensorgehäuses im Querschnitt;
- Fig. 4: eine Teilansicht eines dritten Ausführungsbeispiels eines erfindungsgemäßen Sensorgehäuses mit einem Thermoschutzelement im Querschnitt;
- Fig. 5: eine Teilansicht eines vierten Ausführungsbeispiels eines erfindungsgemäßen Sensorgehäuses mit einem Thermoschutzelement im Querschnitt;
- Fig. 6: Teilansichten zweier Alternativen eines fünften Ausführungsbeispiels eines erfindungsgemäßen Sensorgehäuses mit einem Thermoschutzelement im Querschnitt;
- Fig. 7: eine Teilansicht eines sechsten Ausführungsbeispiels eines erfindungsgemäßen Sensorgehäuses mit einem Thermoschutzelement im Querschnitt;
- Fig. 8: einen Drucksensor mit einem siebten Ausführungsbeispiel eines erfindungsgemäßen Sensorgehäuses in Draufsicht und im Querschnitt;
- Fig. 9: ein achtes Ausführungsbeispiel eines erfindungsgemäßen Sensorgehäuses in Draufsicht; und
- Fig. 10: verschiedene Ansichten einer Sonde, welche mit Sensor mit einem neunten Ausführungsbeispiel des erfindungsgemäßen Sensorgehäuses bestückt ist.

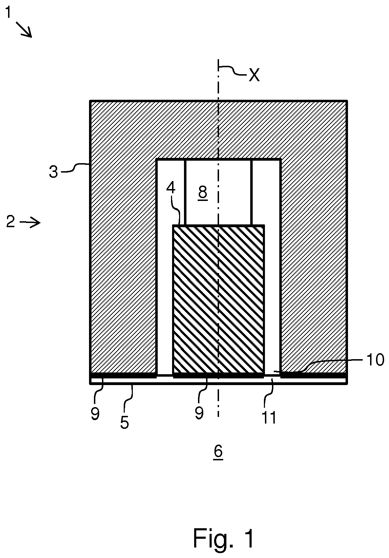

**Figur 1** zeigt ein erstes Ausführungsbeispiel eines Drucksensors 1 mit einem erfindungsgemäßen Sensorgehäuse 2, insbesondere zum Einsatz in einem Brennraum.

Der Drucksensor 1 weist ein Sensorgehäuse 2 mit einem Sensorkörper 3 und einem Membranstempel 4 auf. Der Sensorkörper 3 und der Membranstempel 4 sind mittels additiver Fertigung auf einem Metallblech 5 erzeugt bzw. geformt, welches eine einem Druckraum 6, insbesondere einem Brennraum, zugewandte Öffnung 10 des Sensorkörpers 3 verschließt. Im Inneren des Sensorgehäuses 2 ist ein Druckwandler 8 angeordnet und insbesondere mit dem Membranstempel 4 derart wirkverbunden, dass ein von den Membranstempel 4 aufgenommener Druck, wie weiter unten im Detail beschrieben, von dem Druckwandler 8 in elektrische Signale umgewandelt werden kann.

Der Drucksensor 1 weist vorzugsweise eine Längsachse X auf. Entsprechend werden im Folgenden Richtungen entlang der Längsachse X als "axiale Richtungen" und Richtungen senkrecht zur Längsachse X als "radiale Richtungen" bezeichnet, auch wenn die Längsachse X nicht explizit eingezeichnet ist.

Das Sensorgehäuse 2, insbesondere der Sensorkörper 3 und/oder der Membranstempel 4 und/oder das Metallblech 5, ist vorzugsweise im Wesentlichen rotationssymmetrisch bezüglich der Längsachse X. Das Sensorgehäuse und das Metallblech können alternativ aber auch gar keine Symmetrie oder andere Symmetrie aufweise, beispielsweise in Bezug auf eine Ebene spiegelsymmetrisch sein.

Vorzugsweise sind der Sensorkörper 3 und der Membranstempel 4 mittels additiver Fertigung auf das Metallblech 5 aufgebracht. Insbesondere wird zunächst das Metallblech 5 bereitgestellt und eine Schicht Rohmaterial, etwa Metallstaub, auf das Metallblech aufgebracht. Ein oder mehrere Fertigungsstrahlen, insbesondere Laser- oder Elektronenstrahlen, erhitzen, insbesondere schmelzen, die Rohmaterialschicht in vorgegebenen Punkten. Insbesondere werden die vorgegebenen Punkte sequenziell abgefahren, d.h. abgerastert. Vorzugsweise wird dabei auch, zumindest teilweise, die Oberfläche des Metallblechs 5, an- oder geschmolzen, insbesondere in den vorgegebenen Punkten. Beim Aushärten verbindet sich die Rohmaterialschicht an diesen Punkten mit dem Metallblech 5 stoffschlüssig, insbesondere flächig. Diese stoffschlüssige, flächige Fügeverbindung ist in Figur 1 durch schwarze Balken mit dem Bezugszeichen 9 gekennzeichnet. Anschließend können schrittweise weitere Schichten des Rohmaterials aufgetragen und mit der jeweils bereits ausgehärteten, darunterliegenden Schicht durch den oder die Fertigungsstrahlen verschmolzen werden.

Vorzugsweise weist das Sensorgehäuse 2 bei derart erzeugtem Sensorkörper 3 und Membranstempel 4 einen Spalt 7 zwischen dem Membranstempel 4 und dem Sensorkörper 3 auf. Das Metallblech 5 bildet in dem Bereich, welcher den Spalt 7 zum Druckraum 6 hin begrenzt, insbesondere im Bereich der Öffnung 10 des Sensorkörpers 3, eine, insbesondere flexible bzw. elastische, Membran 11. Die Membran 11 ist daher außen von dem Sensorkörper 3 und innen von dem Membranstempel 4 begrenzt und somit kreisringförmig ausgebildet.

Die Membran 11 ist dazu eingerichtet, Druck aus dem Druckraum 6, insbesondere einem Brennraum, durch Verformungen, insbesondere Auslenkung, aufzunehmen. Die Verformung, insbesondere Auslenkung, der Membran 11 überträgt sich auf den mit der Membran durch die Fügeverbindung 9 verbundenen Membranstempel 4. Das Metallblech 5 bzw. die Membran 11 sind derart eingerichtet, dass der Membranstempel 4 bei auf die Membran 11 einwirkendem Druck vorzugsweise etwa 2-6 µm, bevorzugt etwa 4-5 µm, insbesondere etwa 4,5 µm ausgelenkt wird. Die Auslenkung der Membran 11 bzw. des Membranstempels 4 ist dabei, zumindest im Wesentlichen, proportional zum einwirkenden Druck.

Der Membranstempel 4 ist dazu eingerichtet, den aufgenommenen Druck an den Druckwandler 8 abzugeben bzw. an diesen zu übermitteln oder zu übertragen. Der Druckwandler 8 kann daher ein zum Druck im Druckraum 6, insbesondere in einem Brennraum, proportionales elektrisches Signal erzeugen. Vorzugsweise ist der Druckwandler 8 als piezoelektrisches Element ausgebildet, welches abhängig vom einwirkenden Druck bzw. der darin resultierenden Kompression oder Dekompression eine elektrische Spannung erzeugt.

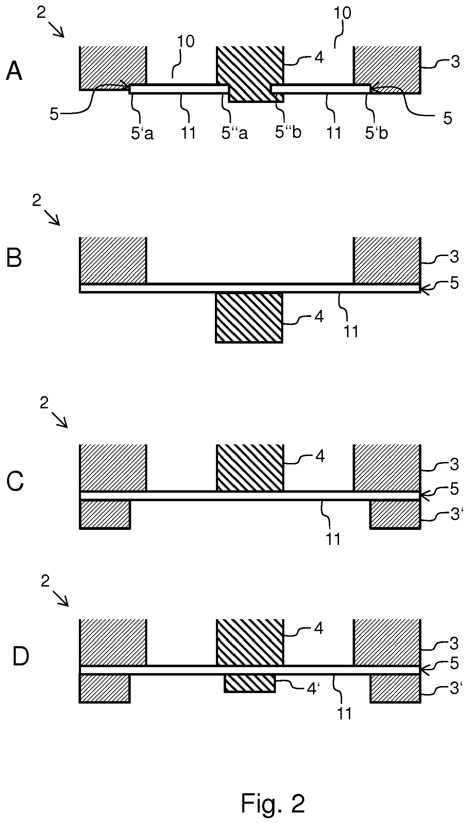

**Figur 2** zeigt mehrere Anordnungsbeispiele eines Metallblechs 5 und/oder eines Sensorkörpers 3 und/oder eines Membranstempels 4 des Sensorgehäuses gemäß dem ersten Ausführungsbeispiel.

**Figur 2A** zeigt einen Teil eines Sensorgehäuses 2, bei dem das Metallblech 5 kreisringförmig ausgebildet ist. Die Differenz aus äußerem Kreisringdurchmesser und innerem Kreisringdurchmesser ist dabei im Wesentlichen gleich, insbesondere nur geringfügig größer, als die Breite des Spalts 7 zwischen dem Sensorkörper 3 und dem Membranstempel 4. Ein erster äußerer Rand 5'a und ein zweiter äußerer Rand 5'b des Metallblechs 5 und ein erster innerer Rand 5"a und ein zweiter innerer Rand 5"b des Metallblechs 5 können dabei auf verschiedene Weisen, insbesondere in verschiedenen Geometrien, mit dem Sensorkörper 3 und/oder dem Membranstempel 4 abschließen bzw. verbunden sein. Im Folgenden werden vier beispielhafte Ausführungsformen der Verbindungsgeometrie beschrieben.

In der ersten beispielhaften Ausführungsform der Verbindungsgeometrie weist der Sensorkörper 3 an der Öffnung 10 auf einer dem Membranstempel 4 zugewandten Innenseite eine Stufe auf, an welcher der erste äußere Rand 5'a anliegt. Die Stufe ist dabei weniger tief als die Stärke des Metallblechs 5 ausgebildet, so dass ein Teil des Metallblechs 5 axial aus dem Sensorkörper 3 herausragt. Vorzugsweise ist das Metallblech 5, insbesondere der erste äußere Rand 5'a, entlang der Konturen der Stufe stoffschlüssig und flächig mit dem Sensorkörper 3 verbunden.

In der zweiten beispielhaften Ausführungsform der Verbindungsgeometrie weist der Membranstempel 4 auf einer der Öffnung 10 zugewandten Seite eine Stufe auf, an weleher der erste innere Rand 5"a anliegt. Die Stufe ist dabei tiefer als die Stärke des Metallblechs 5 ausgebildet, so dass ein Teil des Membranstempels 4 einen druckraumseitigen Vorsprung bildet, insbesondere in den Druckraum 6 hineinragt. Vorzugsweise ist das Metallblech 5, insbesondere der erste innere Rand 5"a, entlang der Konturen der Stufe stoffschlüssig und flächig mit dem Membranstempel 4 verbunden.

In der dritten beispielhaften Ausführungsform der Verbindungsgeometrie weist der Membranstempel 4 auf einer der Öffnung 10 zugewandten Seite eine Ausnehmung auf, welche das Metallblech 5, insbesondere den zweiten inneren Rand 5"b, insbesondere formschlüssig, aufnimmt. Auch in dieser Ausführungsform bildet ein Teil des Membranstempels 4 einen druckraumseitigen Vorsprung und/oder ragt in den Druckraum 6 hinein. Vorzugsweise ist das Metallblech 5, insbesondere der zweite innere Rand 5"b, entlang der Konturen der Ausnehmung stoffschlüssig und flächig mit dem Membranstempel 4 verbunden.

In der vierten beispielhaften Ausführungsform der Verbindungsgeometrie weist der Sensorkörper 3 auf einer der Öffnung 10 zugewandten Innenseite eine Stufe auf, an welcher der zweite äußere Rand 5'b anliegt. Die Stufe ist dabei genauso tief wie die Stärke des Metallblechs 5 ausgebildet, so dass der Sensorkörper 3 auf der dem Druckraum 6 zugewandten Seite bündig mit dem Metallblech 5 abschließt. Vorzugsweise ist das Metallblech 5, insbesondere der zweite äußere Rand 5'b, entlang der Konturen der Stufe stoffschlüssig und flächig mit dem Sensorkörper 3 verbunden.

Es sei angemerkt, dass diese vier Ausführungsformen untereinander austauschbar bzw. miteinander kombinierbar sind.

**Figur 2B** zeigt einen Teil eines Sensorgehäuses 2, insbesondere zum Einsatz in einem Brennraum, bei dem der Membranstempel 4 auf der dem Sensorkörper 3 gegenüberliegenden Seite des Metallblechs 5 aufgebracht ist, so dass der Membranstempel 4 einen druckraumseitigen Vorsprung bildet, insbesondere in den Druckraum 6, insbesondere einen Brennraum, hineinragt. Fertigungstechnisch kann dies erreicht werden, indem zunächst der Sensorkörper 3 auf das Metallblech 5 aufgebracht wird, das daraufhin stoffschlüssig und flächig mit dem Sensorkörper 3 verbundene Metallblech 5 gedreht und anschließend der Membranstempel 4 auf das Metallblech 5 aufgebracht wird. In dieser Ausführungsform ist auch der Druckwandler nicht im Inneren des Sensorkörpers 3, sondern druckraumseitig wirkverbunden mit dem Membranstempel 4 angeordnet.

**Figur 2C** zeigt einen Teil eines Sensorgehäuses 2, bei dem sich der Sensorkörper 3 auf der dem Druckraum 6 zugewandten Seite des Metallblechs 5 in einem Fortsatz 3' fortsetzt. Insbesondere ragt der Fortsatz 3' des Sensorkörpers 3 zumindest teilweise in den Druckraum 6 hinein. Auch dies kann fertigungstechnisch durch ein Drehen bzw. Wenden des Metallblechs 5 während des additiven Fertigungsprozesses erreicht werden.

Insbesondere kann das Metallblech 5 auch kürzer als der Sensorkörper 3 ausgebildet sein. In diesem Fall kann der Fortsatz 3' des Sensorkörpers 3 um das Metallblech 5 herum aufgebaut werden und im additiven Fertigungsprozess direkt mit dem Sensorkörper 3 verbunden werden.

**Figur 2D** zeigt einen Teil eines Sensorgehäuses 2, bei dem sich sowohl der Sensorkörper 3 als auch der Membranstempel 4 auf der dem Druckraum 6 zugewandten Seite des Metallblechs 5 als jeweilige Fortsätze 3', 4' fortsetzen. Insbesondere ragen der Fortsatz 3' des Sensorkörpers 3 und der Fortsatz 4' des Membranstempels 4 zumindest teilweise in den Druckraum 6 hinein. Wie in Figur 2D dargestellt, können die dem Druckraum 6 zugewandten Teile des Sensorkörpers 3 und des Membranstempels 4 in Form und Größe unterschiedlich ausgebildet sein, insbesondere unterschiedlich weit in den Druckraum 6 hineinragen.

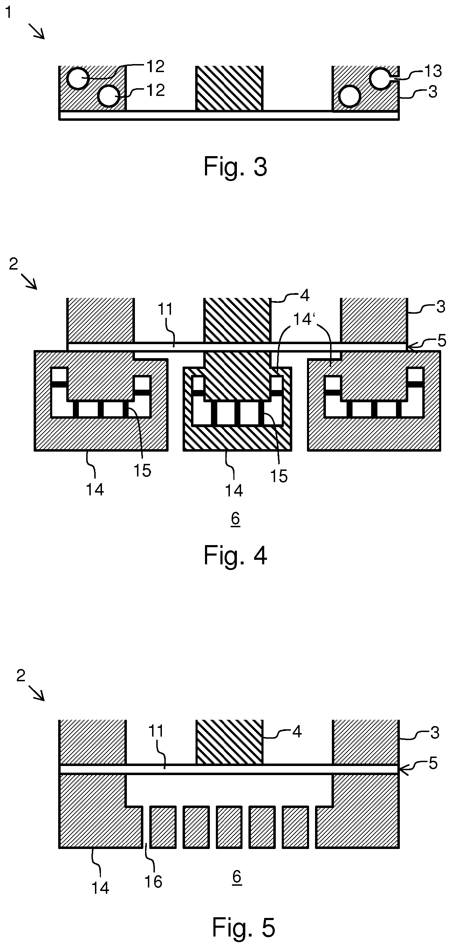

**Figur 3** zeigt ein zweites Ausführungsbeispiel eines erfindungsgemäßen Sensorgehäuses 2, insbesondere zum Einsatz in einem Brennraum, in einer Teilansicht.

Der Sensorkörper 3 weist in diesem Ausführungsbeispiel Kühlkanäle 12 auf, welche kreisförmig im Sensorkörper 3, d.h. entsprechend seiner Form, verlaufen. Die Kühlkanäle 12 sind während der additiven Fertigung des Sensorkörpers 3 leicht zu realisieren, indem an den Orten der Kühlkanäle das Rohmaterial nicht von dem oder den Fertigungsstrahlen verarbeitet wird.

Das dadurch in den Kühlkanälen 12 verbleibende Rohmaterial kann nach der Fertigung des Sensorkörpers 3 durch einen Zugangskanal 13 entfernt, insbesondere ausgeblasen oder ausgespült, werden. Der Zugangskanal 13 kann dabei direkt während der additiven Fertigung des Sensorkörpers 3 oder nachträglich, etwa durch eine Bohrung, erzeugt werden. Vorzugsweise dient der Zugangskanal 13 auch als Kühlmittelzugang, über den ein Kühlmedium in die Kühlkanäle 12 geleitet oder aus diesem abgeleitet werden kann.

**Figur 4** zeigt ein drittes Ausführungsbeispiel des erfindungsgemäßen Sensorgehäuses 2 mit einem Thermoschutzelement 14, insbesondere zum Einsatz in einem Brennraum, welches auf der dem Druckraum 6, insbesondere einem Brennraum, zugewandten Seite des Metallblechs 11 angeordnet ist. Das Thermoschutzelement 14 wird vorzugsweise während der additiven Fertigung des Sensorgehäuses 3 und des Membranstempels 4 erzeugt und ist dadurch stoffschlüssig mit dem Sensorgehäuse 3 und dem Membranstempel 4 verbunden.

Das Thermoschutzelement 14 ist dazu eingerichtet, insbesondere derart geformt, dass es insbesondere die Membran 11, vorzugsweise aber auch den Sensorkörper 3 und/oder den Membranstempel 4 zumindest teilweise vor Hitze aus dem Druckraum 6, insbesondere einem Brennraum. abschirmt. Wie schematisch dargestellt überragt es dabei die Membran zumindest teilweise, erlaubt aber die Einwirkung eines Drucks aus dem Druckraum 6 auf die Membran 11.

Es ist vorteilhaft, einen Wärmeeintrag in den Sensorkörper 3 und/oder den Membranstempel 4 und/oder das Metallblech 5 bzw. die Membran 11 zu vermeiden, da die mit einem Wärmeeintrag verbundene Ausdehnung, Verspannung und/oder Verzerrung die elastischen Eigenschaften insbesondere der Membran 11 und dadurch die Messcharakteristik des Drucksensors 1 beeinflusst. Insbesondere kann solch ein unerwünschter Wärmeeintrag bewirken, dass sich die Membran 11 bei einem vorgegebenen Druck stärker oder weniger stark verformt bzw. der Membranstempel 4 stärker oder weniger stark ausgelenkt wird. Dadurch wird das vom Druckwandler erzeugte elektrische Signal verfälscht, d.h. fällt entsprechend stärker oder weniger stark aus.

Das Thermoschutzelement 14 ist insbesondere durch Verbindungsmittel 15 mit dem Sensorkörper 3 und dem Membranstempel 4 verbunden. Die Verbindungsmittel 15, welche etwa als Stege oder Säulen ausgebildet sein können, sind vorzugsweise thermisch leitend, so dass vom Thermoschutzelement 14 aufgenommene Wärme aus dem Druckraum 6 über die Verbindungsmittel 15 an das Sensorgehäuse 3 und/oder die Membranstempel 4 abgeleitet und dort besonders bevorzugt von einem Kühlmittel über Kühlkanäle abtransportiert werden kann. Bevorzugt sind die Verbindungsmittel 15 flexibel, d.h. mechanisch weich, ausgebildet, so dass sich wärmebedingte Verformungen, Verzerrungen und/oder Verspannungen des Thermoschutzelements 14 nicht auf den Sensorkörper 3 und/oder den Membranstempel 4 übertragen.

Das Thermoschutzelement 14 ist vorzugsweise dazu eingerichtet, sich bei Wärmeeinwirkung entlang seiner Oberfläche, insbesondere in radialer Richtung, auszudehnen. Dabei verformen, insbesondere verziehen, sich die bevorzugt elastischen Verbindungsmittel 15. Alternativ oder zusätzlich ist das Thermoschutzelement 14 dazu eingerichtet, sich bei Wärmeeinwirkung senkrecht zu seiner Oberfläche, insbesondere in axialer Richtung, auszudehnen, wobei sich die bevorzugt elastischen Verbindungsmittel verformen, insbesondere dehnen.

Wie in Figur 4 dargestellt ist das Thermoschutzelement 14 bevorzugt im Wesentlichen symmetrisch mit dem Sensorkörper 3 und/oder dem Membranstempel 4, insbesondere mit druckraumseitig angeordneten, insbesondere in den Druckraum 6 hineinragenden, Vorsprüngen derselben, verbunden, insbesondere an Verbindungsstellen 14'. Durch die Ausdehnung des Thermoschutzelements 14 bewirkte Kräfte, insbesondere Zugkräfte, auf den Sensorkörper 3 und/oder den Membranstempel 4 greifen dadurch radial beidseitig über die Verbindungsstellen 14' am Sensorkörper 3 und/oder am Membranstempel 4 an und heben sich gegenseitig auf, ohne eine Verformung und/oder Verspannungen und/oder Verzerrung des Sensorkörper 3 und/oder des Membranstempels 4 zu verursachen und dadurch die elastischen Eigenschaften der Membran 11 bzw. die Messcharakteristik des Drucksensors 1 zu beeinflussen.

Alternativ zu der in Figur 4 gezeigten Ausführungsform ist es auch möglich, das Thermoschutzelement nur an dem Sensorkörper 3 und/oder dem Membranstempel 4 anzuordnen.

**Figur 5** zeigt ein viertes Ausführungsbeispiel des erfindungsgemäßen Sensorgehäuses 2 mit einem Thermoschutzelement 14.

Bei diesem Ausführungsbeispiel überspannt das Thermoschutzelement 14 das Metallblech 5, insbesondere die Membran 11, brückenartig. Insbesondere deckt das Thermoschutzelement 14 im Wesentlichen die gesamte dem Druckraum 6 zugewandten Seite des Sensorgehäuses 2 ab. Vorzugsweise ist das Thermoschutzelement 14 dabei mit dem Sensorkörper 3 verbunden, insbesondere additiv mit diesem gefertigt. Weiter vorzugsweise ist das Thermoschutzelement 14 dabei besonders massiv ausgebildet, so dass es Wärme aus dem Druckraum 6, insbesondere einem Brennraum, besonders gut aufnehmen kann. Um das Einwirken eines Drucks aus dem Druckraum 6, insbesondere einem Brennraum, auf die Membran 11 zu ermöglichen, weist das Thermoschutzelement 14 Löcher 16 oder Schlitze auf, welche insbesondere in axialer Richtung angeordnet sind.

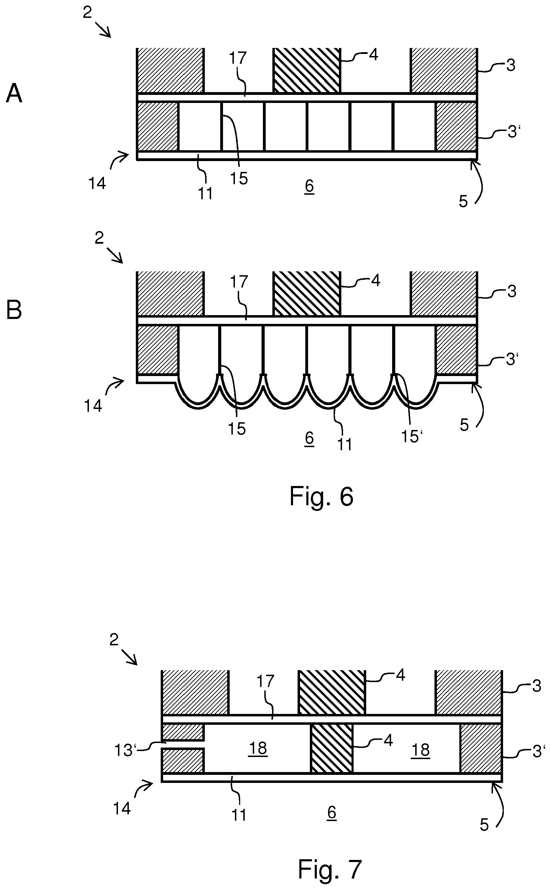

**Figur 6** zeigt ein fünftes Ausführungsbeispiel des erfindungsgemäßen Sensorgehäuses 2 mit einem Thermoschutzelement 14.

Bei diesem Ausführungsbeispiel wird das Thermoschutzelement 14 durch das Metallblech 5, welches in diesem Ausführungsbeispiel insbesondere eine Metallfolie ist, gebildet.

Die Membran 11 wird vorzugsweise durch eine Stützstruktur 17 gestützt. Die Stützstruktur 17 kann hierbei vorzugsweise als Gitter oder Lochblech ausgebildet sein und steht mit dem Membranstempel 4 in Kontakt oder ist mit diesem stoffschlüssig verbunden.

Auch die Stützstruktur ist, wie das Metallblech 5 vorzugsweise während der additiven Fertigung, stoffschlüssig und flächig mit dem Sensorkörper 3 und/oder mit einem druckraumseitig angeordneten, insbesondere mit einem in den Druckraum 6 hineinragenden Vorsprung 3' des Sensorköpers 3, verbunden.

Zudem ist die Stützstruktur vorzugsweise über, insbesondere additiv gefertigte, Verbindungsmittel 15 mit dem Metallblech 5, insbesondere mit der Membran 11, stoffschlüssig verbunden.

Die Verbindungsmittel 15 sind in diesem Ausführungsbeispiel vorzugsweise starr und thermisch nichtleitend ausgebildet, so dass von der Membran 11 aufgenommene Wärme nicht oder nur in geringem Maße an die Stützstruktur 17 abgegeben werden kann.

**Figur 6A** zeigt das Thermoschutzelement 14 in einem ersten, insbesondere relaxierten, Zustand, in dem es keine oder nur wenig Wärme aufgenommen hat. Die Membran 11 bildet dabei eine im Wesentlichen ebene Fläche und ist im Wesentlichen parallel zur Stützstruktur angeordnet.

Die Membran 11 ist dazu eingerichtet, Wärme aus dem Druckraum 6 aufzunehmen und sich dabei entlang ihrer Oberfläche, insbesondere in radialer Richtung, auszudehnen. Insbesondere nimmt die Membran 11 dabei eine wellen- oder bogenartige Form an.

**Figur 6B** zeigt das Thermoschutzelement 14 in einem aktivierten Zustand, in dem es Wärme, insbesondere nach einem Thermoschock, aufgenommen hat. Aufgrund der geringen Stärke der Membran 11, insbesondere der Metallfolie, und der Verbindung mit den starren Verbindungsmitteln 15 verformt sich die Membran 11 beim Ausdehnen entlang ihrer Oberfläche in axialer Richtung. Insbesondere nimmt die Membran 11 eine wellen-, buckel- oder bogenartige Form an, wobei die Knotenpunkte der Welle, Buckel oder Bögen an den Verbindungspunkte 15' der Verbindungsmittel 15 liegen. Dabei wird keine Kraft durch die Verbindungsmittel 15 auf die Stützstruktur 17 ausgeübt oder übertragen, so dass eine Verformung, eine Spannung und/oder eine Verzerrung der Stützstruktur 17 und damit eine Beeinflussung der Messecharakteristik des Drucksensors 1 vermieden wird.

**Figur 7** zeigt ein sechstes Ausführungsbeispiel des erfindungsgemäßen Sensorgehäuses 2 mit einem Thermoschutzelement 14.

Auch in diesem Ausführungsbeispiel wird das Thermoschutzelement 14 durch das Metallblech 5, insbesondere eine Metallfolie, gebildet und überspannt die Stützstruktur 17 brückenartig. Insbesondere deckt die Membran 11 eine dem Druckraum 6 zugewandte Seite des Sensorgehäuses 2 ab. Vorzugsweise verbindet ein Fortsatz 4' des Membranstempels 4 in diesem Ausführungsbeispiel die Stützstruktur 17 mit der Membran 11.

Die Stützstruktur 17 ist, insbesondere durch additive Fertigung des Sensorkörpers 3 und/oder des Membranstempels 4, stoffschlüssige und flächig mit dem Sensorkörper 3 und dem Membranstempel 4 verbunden.

Zwischen dem Metallblech 5, insbesondere der Membran 11, und der Stützstruktur 17, welche in diesem Fall wenigstens flüssigkeitsdicht ist, ist ein Koppelmedium 18, vorzugsweise ein Kühlmedium, angeordnet. Insbesondere schließt das Metallblech 5, insbesondere die Membran 11, und die Stützstruktur 17 das Koppelmedium 18 sandwichartig ein. Durch das Koppelmedium 18 besteht eine Wirkverbindung in axialer Richtung zwischen dem Metallblech 5, insbesondere der Membran 11, und der Stützstruktur 17.

Die Membran 11 ist dazu eingerichtet, Wärme aus dem Druckraum 6 aufzunehmen und an das Koppelmedium 18 weiterzuleiten, welche sich durch den Wärmeeintrag ausdehnt. Da das Koppelmedium 18 in radialer Richtung durch den Sensorkörper 3 und den Membranstempel 4' starr und in axialer Richtung durch die Membran 11 und die Stützstruktur 17 elastisch begrenzt wird, verformen sich die Membran 11 und die Stützstruktur 17 dabei symmetrisch, d.h. entgegengesetzt. Insbesondere wird die Stützstruktur 17 in Richtung des Innenraums des Sensorkörpers 3, d.h. zu der dem Druckraum 6 abgewandten Seite hin, ausgelenkt, während die Membran 11 in Richtung des Druckraums 6, d.h. zu der dem Druckraum 6 zugewandten Seite hin, ausgelenkt wird.

Vorzugsweise gleichen sich die elastischen Eigenschaften der Membran 11 und der Stützstruktur 17 derart, dass die Auslenkung in der Membran 11 und der Stützstruktur 17 entgegengesetzt gleich sind.

Alternativ oder zusätzlich leitet das Koppelmedium 18 die aufgenommene Wärme derart an die Stützstruktur 17weiter, dass die Auslenkung in der Membran 11 und der Stützstruktur 17 entgegengesetzt gleich sind. Die am Membranstempel 4 wirkende, durch die Auslenkungen der Membran 11 und der Stützstruktur 17 bedingte Kraft wird daher kompensiert, d.h. eine Auslenkung des Membranstempels 4 durch Wärmeeinwirkung, insbesondere bei einem Thermoschock, wird vermieden.

Vorzugsweise weist der Sensorkörper 3 wenigstens einen weiteren Zugangskanal 13' auf, welcher zwischen dem Metallblech 5 und der weiteren Membran 17 angeordnet ist. Über den weiteren Zugangskanal 13' kann das Koppelmedium 18, insbesondere ein Kühlmedium, zwischen das Metallblech 5, insbesondere die Membran 11, und die weitere Membran 17 geleitet und/oder von dort abgeleitet werden. Vorzugsweise wird der weitere Zugangskanal 13' während der additiven Fertigung des Sensorkörpers 3 erzeugt.

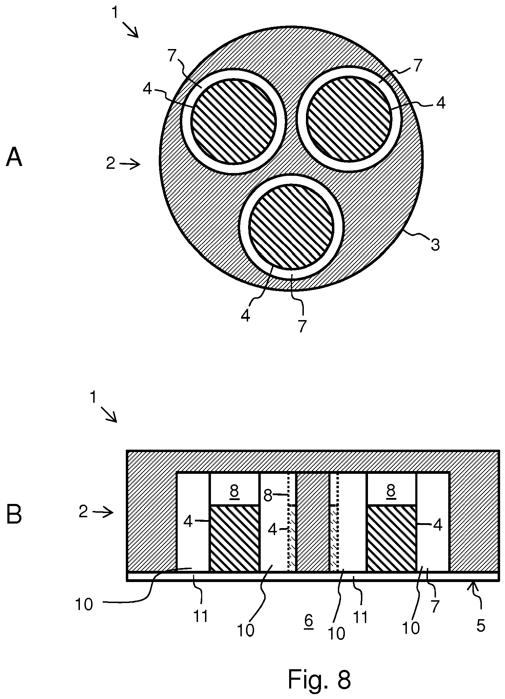

**Figur 8** zeigt ein siebtes Ausführungsbeispiel eines Drucksensors 1 mit einem erfindungsgemäßen Sensorgehäuses 2, insbesondere zum Einsatz in einem Brennraum.

Mittels additiver Fertigung ist der Sensorkörper 3 derart auf das Metallblech 5 aufgebracht, dass drei Membranstempel 4 in dem Sensorkörper 3 angeordnet, insbesondere während der additiven Fertigung erzeugt bzw. auf das Metallblech 5 aufgebracht, werden können. Entsprechend weist das Sensorgehäuse 2 in diesem Ausführungsbeispiel drei Druckwandler 8 auf, welche jeweils mit einem Membranstempel 4 wirkverbunden sind.

**Figur 8A** zeigt das siebte Ausführungsbeispiel des erfindungsgemäßen Sensorgehäuses 2 eines Drucksensors 1 in einer Draufsicht vom Druckraum her. Der Übersichtlichkeit halber ist das Metallblech, welches die drei Öffnungen 10 des Sensorkörpers 3 zum Druckraum 6 hin schließt, nicht eingezeichnet.

In der Draufsicht sind die drei Spalte 7 zwischen jedem der drei Membranstempel 4 und dem Sensorkörper 3 gut zu erkennen. Das nicht dargestellte Metallblech bildet an den drei Öffnungen 10 zwischen dem Sensorkörper 3 und den drei Membranstempeln 4 jeweils eine Membran, so dass die drei Membranstempel 4, insbesondere unabhängig voneinander, axial beweglich gelagert sind und dadurch einen auf die jeweilige Membran einwirkenden Druck aufnehmen können bzw. an einen jeweiligen Druckwandler weiterleiten bzw. abgeben können.

**Figur 8B** zeigt das siebte Ausführungsbeispiel des erfindungsgemäßen Sensorgehäuses 2 eines Drucksensors 1 in einem zur Draufsicht senkrechten Querschnitt. Ein Membranstempel 4 sowie ein Druckwandler 8, welche nicht in der Schnittebene liegen, sind dabei gestrichelt eingezeichnet.

Die Öffnungen 10 des Sensorkörpers 3 sind zum Druckraum 6 hin mit dem Metallblech 5 geschlossen, welches zwischen dem Sensorkörper 3 und jedem der Membranstempel 4 jeweils eine Membran 11 bildet. Jeder der Membranstempel 4 ist mit einem Druckwandler 8 wirkverbunden, so das eine druckbedingte Verformung, insbesondere Auslenkung, der mit dem Membranstempel 4 verbundenen Membran 11 die Erzeugung eines zum auf die Membran 11 wirkenden Druck proportionalen elektrischen Signals bewirkt.

Durch ein Sensorgehäuse 2 mit drei oder auch zwei oder mehreren Druckwandlern 8, Membranstempeln 4 und Membranen 11, die in oder an einem Sensorkörper 3 angeordnet sind, liefert die Messung eines Drucks in einem Druckraum 6 mit einem entsprechenden Drucksensor 1 drei oder auch zwei oder mehrere elektrische Signale. Diese Redundanz ermöglicht die Kontrolle bzw. Überwachung der einzelnen Druckwandler 8, so dass die Druckmessung zuverlässiger wird.

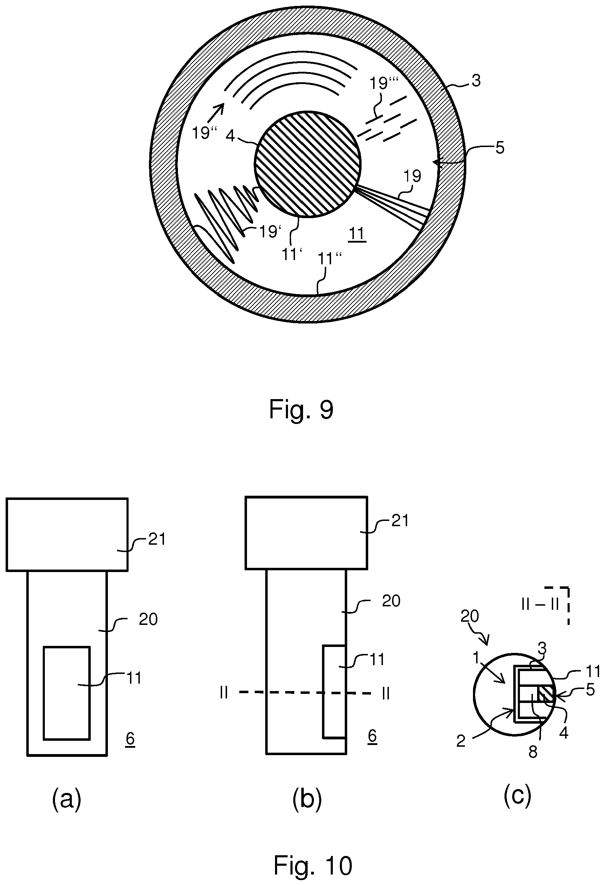

**Figur 9** zeigt ein achtes Ausführungsbeispiel eines erfindungsgemäßen Sensorgehäuses 2 in Draufsicht. Das Metallblech 5 ist in den schraffiert eingezeichneten Bereichen durch additive Fertigung stoffschlüssig und flächig mit dem Sensorkörper 3 und dem Membranstempel 4 verbunden. Zwischen dem Sensorkörper 3 und dem Membranstempel 4 bildet das Metallblech 5 eine Membran 11.

Das Metallblech 5, insbesondere die Membran 11, weist Membranstrukturen 19-19‴ zur Wärmeaufnahme und/oder Wärmeableitung auf. Alternativ oder zusätzlich sind die Membranstrukturen 19-19‴ dazu eingerichtet, die elastischen Eigenschaften der Membran 11 zu beeinflussen, insbesondere die Membran 11 zu versteifen. Die Membranstrukturen 19-19‴ verlaufen insbesondere linienförmig, etwa geradlinig und/oder gewunden, auf der Oberfläche der Membran 11. Vorzugsweise werden die Membranstrukturen 19-19‴ während der additiven Fertigung des Sensorkörpers 3 und/oder des Membranstempels 4 auf das Metallblech 5, insbesondere auf die Membran 11, aufgebracht und stoffschlüssig mit dieser verbunden. Insbesondere sind die Membranelemente 19-19‴ als mit dem Metallblech 5, insbesondere der Membran 11, stoffschlüssig verbundene Metallstreifen ausgebildet und vorzugsweise dazu eingerichtet, aufgenommene Wärme in radialer Richtung zum Sensorkörper 3 abzuleiten, wo die Wärme bevorzugt von einem Kühlmedium in Kühlkanälen aufgenommen und abgeleitet wird.

In einer ersten Ausführung verlaufen die Membranstrukturen 19 in radialer Richtung, insbesondere fächerförmig, insbesondere von einem inneren Membranrand 11' zu einem äußeren Membranrand 11".

In einer zweiten Ausführung verlaufen die Membranstrukturen 19' wellenförmig, insbesondere in radialer Richtung, insbesondere vom inneren Membranrand 11' zum äußeren Membranrand 11".

In einer dritten Ausführung verlaufen die Membranstrukturen 19" kreis- und/oder teilkreisförmig um den inneren Membranrand 11'.

In einer vierten Ausführung verlaufen die Membranstrukturen 19‴ in radialer Richtung, insbesondere mit gleicher oder unterschiedlicher Länge, insbesondere zufällig verteilt.

Die **Figur 10** zeigt verschiedene Ansichten einer Sonde 20, welche mit einem Sensor 1 mit einem neunten Ausführungsbeispiel des erfindungsgemäßen Sensorgehäuses 2 ausgestattet ist.

Die **Figuren 10a und 10b** sind jeweils Seitenansichten einer Sonde 20, welche um 45° in Bezug auf eine Achse der Sonde 20 verdreht sind. **Figur 10c** zeigt einen Querschnitt durch die Sonde 20 in der Ebene II-II gemäß Fig. 10b.

Werden Druckmesssensoren, wie beispielsweise der in Fig. 1 gezeigte Drucksensor 1, verbaut, beispielsweise in einer Brennkraftmaschine, um den Zylinderdruck zu messen, so ist die Membran 11 üblicherweise an dem Ende des Drucksensors 1, wie in Fig. 1 gezeigt, angeordnet, welches zu der Messstelle eingebracht wird, beispielsweise in den Brennraum. Typischerweise würde hierbei ein Drucksensor 1 nach Fig. 1 in einer Bohrung in dem Motorblock befestigt, insbesondere verschraubt, werden. In diesem Fall ist es sinnvoll, dass der Drucksensor 1 rund ist, um eine optimale Raumausbeute zu erzielen.

Durch den Einsatz der additiven Fertigung lassen sich jedoch Sensorformen bzw. Sensorgehäuseformen verwirklichen, welche nicht achsensymmetrisch sind. Insbesondere lassen sich, wie aus den Figuren 10a und 10b hervorgeht, rechteckige Sensorgehäuse 2 mit ebenfalls rechteckigen Membranen 11 verwirklichen.

Grundsätzlich kann dabei in allen Ausführungsbeispielen des erfindungsgemäßen Sensorgehäuses 2 vorgesehen sein, dass das Sensorgehäuse 2 außen eine eckige, insbesondere rechteckige, Kontur aufweist. In diesem Fall kann auch die Membran 11, welche durch den Sensorkörper 3 gestützt wird, eine rechteckige Form aufweisen.

Dies hat den Vorteil, dass das Sensorgehäuse 2 in eine Raumrichtung, in welcher viel Platz vorhanden ist, weiter ausgedehnt sein kann als in eine andere Raumrichtung. Durch die größere Ausdehnung der Membran 11 und die damit verbundene größere Fläche weist ein mit einer solchen Membran 11 versehener Drucksensor 1 eine höhere Empfindlichkeit auf. Insbesondere kann ein solches rechteckiges Sensorgehäuse 2 bzw. ein rechteckiger Sensor 1 über eine relativ kleine Montagebohrung, beispielsweise in einen Brennraum 6, eingebracht werden.

Beispielsweise kann ein solcher Drucksensor 1 seitlich an einer Sonde 20 angeordnet werden, wie dies beispielsweise in der AT 407 577 B der Anmelderin gezeigt ist, bei welcher der Drucksensor in einer Zündkerze, die in diesem Fall als Sonde 20 dient, integriert ist (vgl. hierzu insbesondere Fig. 3 der AT 407 577 B). Hier wird ein Drucksensor in Verbindung mit einer Zündkerze in eine Zündkerzenbohrung in den Brennraum einer Brennkraftmaschine eingebracht. Durch seine rechteckige Form weist die Membran des Drucksensors 1 dabei eine wesentlich vergrößerte Fläche auf.

Auch ein Drucksensor 1 mit einem erfindungsgemäßen Sensorgehäuse 2 kann in der Weise beispielsweise seitlich an einer Sonde 20 angeordnet sein, wie dies in den Figuren 10a, 10b und 10c aus verschiedenen Perspektiven dargestellt ist.

Zusätzlich kann eine Membran 11 auch, wie in den Figuren 10b und 10c gezeigt, entlang einer Raumrichtung gewölbt sein. Verallgemeinernd ausgedrückt können Membranformen realisiert werden, die nicht rotationssymmetrisch sind.

Durch die rechteckige Form weist der Drucksensor 1 bzw. dessen Membran 11 eine wesentlich vergrößerte Wirkfläche und damit eine höhere Empfindlichkeit auf. Bei einer Anordnung in einer Sonde 20, wie in Fig. 10 gezeigt, oder in einer mit einer Zündkerze kombinierten Sonde, wie in Fig. 3 der AT 407 577 B gezeigt, kann die Montagebohrung sehr klein gehalten werden. Die Sonde 20 wird in die Montagebohrung eingeschoben und mittels des Sondensockels 21 in einem Motorgehäuse bzw. in der jeweiligen zu messenden Anwendung verschraubt.

Der Drucksensor 1 wird vorzugsweise von der Seite in die Sonde 20 eingeschoben und in dieser, beispielsweise durch eine Verschraubung oder sonstige Fügetechnik, befestigt. Selbstverständlich sind auch andere Sensorformen bzw. Sensorgehäuseformen und Membranformen möglich. Insbesondere kann das Metallblech 5 mehrfach gewellt sein oder auch andere Strukturen aufweisen, welche im Wesentlichen nur entlang einer Raumrichtung verlaufen.

Bei den zuvor beschriebenen exemplarischen Ausführungsbeispielen handelt es sich lediglich um Beispiele, die den Schutzbereich, die Anwendung und den Aufbau der Erfindung in keiner Weise einschränken sollen. Vielmehr wird dem Fachmann durch die vorausgehende Beschreibung ein Leitfaden für die Umsetzung von mindestens einem exemplarischen Ausführungsbeispiel gegeben, wobei diverse Änderungen, insbesondere im Hinblick auf die Funktion und Anordnung der beschriebenen Bestandteile und Kombinationen der Merkmal e verschiedener Ausführungsbeispiele, vorgenommen werden können, ohne den Schutzbereich zu verlassen, wie er sich aus den Ansprüchen ergibt.

### Bezugszeichenliste

- 1: Sensor
- 2: Sensorgehäuse
- 3: Sensorkörper
- 4: Membranstempel
- 5: Metallblech
- 5'a, 5'b: erster, zweiter äußerer Rand
- 5"a, 5"b: erster, zweiter innerer Rand
- 6: Druckraum
- 7: Spalt
- 8: Druckwandler
- 9: stoffschlüssige Fügeverbindung
- 10: Öffnung des Sensorkörpers
- 11: Membran
- 12: Hohlraum
- 13: Zugangskanal
- 13': weiterer Zugangskanal
- 14: Thermoschutzelement
- 14': Verbindungsstellen
- 15: Verbindungsmittel
- 15': Verbindungspunkte
- 16: Löcher
- 17: weitere Membran
- 18: Koppelmedium
- 19, 19', 19", 19‴: Membranstrukturen
- 20: Sonde
- 21: Sondensockel

## Patentansprüche

1. Sensorgehäuse (2), insbesondere zum Einsatz in einem Brennraum, für einen Kraft- oder Drucksensor (1), aufweisend:
- einen metallischen Sensorkörper (3); und
- ein Metallblech (5), welches den Sensorkörper (3) einseitig abschließt;
- wenigstens einen metallischen Membranstempel (4), welcher mit dem Metallblech (5) in Kontakt ist;
wobei der Sensorkörper (3) und/oder der Membranstempel durch additive Fertigung auf das Metallblech (5) aufgebracht und durch eine während der additiven Fertigung erzeugte stoffschlüssige Fügeverbindung (9) mit dem Metallblech (5) verbunden ist und wobei das Metallblech (5) in einem durch den Sensorkörper (3) begrenzten Bereich eine, insbesondere runde, Membran (11) bildet,
wobei der Sensorkörper und/oder der Membranstempel wenigstens einen Hohlraum aufweist, welcher während der additiven Fertigung des Sensorkörpers und/oder des Membranstempels ausgebildet wird.

2. Sensorgehäuse (2) nach Anspruch 1,
wobei die Membran (11), insbesondere kreisringförmig, zwischen dem Sensorkörper (3) und dem Membranstempel (4) gebildet wird.

3. Sensorgehäuse (2) nach Anspruch 2, wobei das Metallblech (5) einerseits und der Sensorkörper (3) und/oder der wenigstens eine Membranstempel (4) andererseits verschiedene Materialien aufweisen.

4. Sensorgehäuse (2) nach einem der vorangehenden Ansprüche, wobei das Metallblech (5) in dem wenigstens einen Bereich, in welchem es mittels einer stoffschlüssigen Fügeverbindung (9) mit dem Sensorkörper (3) und/oder dem Membranstempel (4) verbunden ist, ein starres Teilstück und in dem Bereich der Membran (11) ein flexibles Teilstück aufweist.

5. Sensorgehäuse (2) nach einem der vorangehenden Ansprüche, wobei der Sensorkörper (3) und/oder der Membranstempel (4) wenigstens einen Kühlkanal (13) aufweist, welcher während der additiven Fertigung des Sensorkörpers (3) und/oder des Membranstempels (4) ausgebildet wird.

6. Sensorgehäuse (2) nach einem vorangehenden Ansprüche, aufweisend ein Thermoschutzelement (14), welches durch additive Fertigung stoffschlüssig mit dem Sensorkörper (3) und/oder dem Membranstempel (4) verbunden und auf einer einem Druckraum (6) zuwendbaren Seite des Sensorkörpers (3) und/oder des Membranstempels (4) und/oder der Membran (11) angeordnet ist.

7. Sensorgehäuse (2) nach Anspruch 6, wobei das Thermoschutzelement (14) mittels, insbesondere additiv gefertigter, vorzugsweise flexibler Verbindungsmittel (15) stoffschlüssig und/oder thermisch leitend mit dem Sensorkörper (3) und/oder dem Membranstempel (4) wirkverbunden ist.

8. Sensorgehäuse (2) nach einem der Ansprüche 1 bis 7, wobei die Membran (11) zusammen mit wenigstens einem Abschnitt des Sensorkörpers (3) ein Thermoschutzelement (14) bildet, des Weiteren aufweisend:
eine Stützstruktur (17), wobei das Metallblech (5), insbesondere im Bereich der Membran (11) mittels, insbesondere additiv gefertigter, vorzugsweise starrer Verbindungsmittel (15) oder mittels eines Koppelmediums (18) mit der Stützstruktur (17) wirkverbunden ist.

9. Sensorgehäuse (2) nach Anspruch 8, wobei die Stützstruktur (17) mit dem Membranstempel (4) in Kontakt ist.

10. Sensorgehäuse (2) nach Anspruch 8, wobei der Sensorkörper und/oder der Membranstempel (4) durch additive Fertigung auf die Stützstruktur (17) aufgebracht und durch eine während der additiven Fertigung erzeugte, insbesondere flächige, stoffschlüssige Fügeverbindung (9) mit der Stützstruktur (5) verbunden sind.

11. Sensorgehäuse (2) nach einem der vorangehenden Ansprüche, wobei das Metallblech (5) im Bereich der Membran (11) wärmeleitende und/oder versteifende, insbesondere additiv gefertigte, Membranstrukturen (19-19‴) aufweist, welche durch eine während der additiven Fertigung erzeugte stoffschlüssige Fügeverbindung (9) mit dem Metallblech (5) verbunden sind.

12. Drucksensor (1), insbesondere zum Einsatz in einem Brennraum, oder Kraftsensor mit einem Sensorgehäuse (2) nach einem der vorangehenden Ansprüche und einem Druckwandler (8), insbesondere einem piezoelektrischen Messelement, wobei der Druckwandler (8) im Inneren des Sensorkörpers (3) angeordnet und zur Wandlung eines/einer durch den Membranstempel (4) aufgenommenen Drucks/Kraft in ein elektrisches Signal eingerichtet ist.

13. Verfahren zur Herstellung eines Sensorgehäuses (2) nach einem der Ansprüche 1 bis 11, insbesondere zum Einsatz in einem Brennraum, für einen Kraft- oder Drucksensor (1), folgende Schritte aufweisend:
- Bereitstellen eines Metallblechs (5); und
- Aufbringen eines Sensorkörpers (3) und/oder wenigstens eines Membranstempels (4) auf dem Metallblech (5) mittels additiver Fertigung, wobei die additive Fertigung eine stoffschlüssige Fügeverbindung (9) zwischen dem Sensorkörper (3) und/oder dem wenigstens einen Membranstempel (4) einerseits und dem Metallblech (5) andererseits erzeugt.

14. Verwendung einer additiven Fertigungsvorrichtung zur Herstellung eines Sensorgehäuses (2), insbesondere zum Einsatz in einem Brennraum, eines Kraft- oder Drucksensors (1) gemäß einem der Ansprüche 1 bis 11.

## Claims

1. A sensor housing (2), in particular for use in a combustion chamber, for a force or pressure sensor (1), comprising:
- a metallic sensor body (3); and
- a metal plate (5) which closes off the sensor body (3) on one side;
- at least one metallic diaphragm stamp (4), which is in contact with the metal sheet (5);
wherein the sensor body (3) and/or the diaphragm stamp is applied to the metal sheet (5) by additive manufacturing and is connected to the metal sheet (5) by a material-locking joint (9) produced during additive manufacturing, and wherein the metal sheet (5) forms a diaphragm (11), in particular a round diaphragm (11), in a region delimited by the sensor body (3),
wherein the sensor body and/or the diaphragm stamp has at least one cavity which is formed during the additive manufacturing of the sensor body and/or the diaphragm stamp.

2. Sensor housing (2) according to claim 1,
wherein the diaphragm (11) is formed, in particular in the shape of a circular ring, between the sensor body (3) and the diaphragm stramp (4).

3. Sensor housing (2) according to claim 2, wherein the metal sheet (5) on the one hand and the sensor body (3) and/or the at least one diaphragm stamp (4) on the other hand comprise different materials.

4. Sensor housing (2) according to one of the preceding claims, wherein the metal sheet (5) has a rigid section in the at least one region in which it is connected to the sensor body (3) and/or the diaphragm stamp (4) by means of a material-locking joint connection (9) and a flexible section in the region of the diaphragm (11).

5. Sensor housing (2) according to one of the preceding claims, wherein the sensor body (3) and/or the diaphragm stamp (4) has at least one cooling channel (13) which is formed during the additive manufacturing of the sensor body (3) and/or the diaphragm stamp (4).

6. Sensor housing (2) according to one of the preceding claims, having a thermal protection element (14) which is connected by additive manufacturing to the sensor body (3) and/or the diaphragm stramp (4) by material bonding and is arranged on a side of the sensor body (3) and/or of the diaphragm stramp (4) and/or of the diaphragm (11) which can face a pressure space (6).

7. Sensor housing (2) according to claim 6, wherein the thermal protection element (14) is operatively connected to the sensor body (3) and/or the diaphragm stramp (4) by means of, in particular, additively manufactured, preferably flexible connecting means (15) in a material-locking and/or thermally conductive manner.

8. Sensor housing (2) according to any one of claims 1 to 7, wherein the diaphragm (11) together with at least a portion of the sensor body (3) forms a thermal protection element (14), further comprising:
a support structure (17), wherein the metal sheet (5), in particular in the region of the diaphragm (11), is operatively connected to the support structure (17) by means of, in particular additively manufactured, preferably rigid connecting means (15) or by means of a coupling medium (18).

9. Sensor housing (2) according to claim 8, wherein the support structure (17) is in contact with the diaphragm stramp (4).

10. Sensor housing (2) according to claim 8, wherein the sensor body and/or the diaphragm stamp (4) are applied to the support structure (17) by additive manufacturing and are connected to the support structure (5) by means of a, in particular, two-dimensional, material-locking joint (9) produced during the additive manufacturing.

11. Sensor housing (2) according to one of the preceding claims, wherein the metal sheet (5) has, in the region of the diaphragm (11), heat-conducting and/or stiffening, in particular additively manufactured, diaphragm structures (19-19"') which are connected to the metal sheet (5) by means of a material-locking joint (9) produced during additive manufacturing.

12. Pressure sensor (1), in particular for use in a combustion chamber, or force sensor having a sensor housing (2) according to one of the preceding claims and a pressure transducer (8), in particular a piezoelectric measuring element, the pressure transducer (8) being arranged in the interior of the sensor body (3) and being set up for converting a pressure/force picked up by the diaphragm stramp (4) into an electrical signal.

13. A method of manufacturing a sensor housing (2) according to any one of claims 1 to 11, in particular for use in a combustion chamber, for a force or pressure sensor (1), comprising the following steps:
- providing a metal sheet (5); and
- applying a sensor body (3) and/or at least one diaphragm stamp (4) to the metal sheet (5) by means of additive manufacturing, the additive manufacturing producing a material-locking joint (9) between the sensor body (3) and/or the at least one diaphragm stamp (4) on the one hand and the metal sheet (5) on the other hand.

14. Use of an additive manufacturing device for manufacturing a sensor housing (2), in particular for use in a combustion chamber, of a force or pressure sensor (1) according to any one of claims 1 to 11.

## Revendications

1. Boîtier de capteur (2), en particulier destiné à être employé dans une chambre de combustion, pour un capteur de force ou de pression (1), présentant :
- un corps de capteur métallique (3) ; et
- une tôle en métal (5), laquelle termine d'un côté le corps de capteur (3) ;
- au moins un poinçon à membrane métallique (4), lequel est en contact avec la tôle en métal (5) ;
dans lequel le corps de capteur (3) et/ou le poinçon à membrane sont appliqués sur la tôle en métal (5) par une fabrication additive et sont reliés à la tôle en métal (5) par une liaison d'assemblage (9) par liaison de matière produite au cours de la fabrication additive et dans lequel la tôle en métal (5) forme, dans une zone délimitée par le corps de capteur (3), une membrane (11) en particulier ronde,
dans lequel le corps de capteur et/ou le poinçon à membrane présentent au moins un espace creux, lequel est réalisé au cours de la fabrication additive du corps de capteur et/ou du poinçon à membrane.

2. Boîtier de capteur (2) selon la revendication 1,
dans lequel la membrane (11) est formée, en particulier en forme d'anneau circulaire, entre le corps de capteur (3) et le poinçon à membrane (4).

3. Boîtier de capteur (2) selon la revendication 2, dans lequel la tôle en métal (5) d'une part et le corps de capteur (3) et/ou l'au moins un poinçon à membrane (4) d'autre part présentent des matériaux différents.

4. Boîtier de capteur (2) selon l'une quelconque des revendications précédentes, dans lequel la tôle en métal (5) présente dans l'au moins une zone, dans laquelle elle est reliée au corps de capteur (3) et/ou au poinçon à membrane (4) au moyen d'une liaison d'assemblage (9) par liaison de matière, une pièce partielle rigide et, dans la zone de la membrane (11), une pièce partielle flexible.

5. Boîtier de capteur (2) selon l'une quelconque des revendications précédentes, dans lequel le corps de capteur (3) et/ou le poinçon à membrane (4) présentent au moins un canal de refroidissement (13), lequel est réalisé au cours de la fabrication additive du corps de capteur (3) et/ou du poinçon à membrane (4).

6. Boîtier de capteur (2) selon l'une quelconque des revendications précédentes, présentant un élément de protection thermique (14), lequel est relié par liaison de matière au corps de capteur (3) et/ou au poinçon à membrane (4) par fabrication additive et est disposé sur un côté, pouvant être tourné vers un espace de pression (6), du corps de capteur (3) et/ou du poinçon à membrane (4) et/ou de la membrane (11).

7. Boîtier de capteur (2) selon la revendication 6, dans lequel l'élément de protection thermique (14) coopère par liaison de matière et/ou de manière thermoconductrice avec le corps de capteur (3) et/ou le poinçon à membrane (4) au moyen de moyens de liaison (15) de préférence flexibles fabriqués en particulier de manière additive.

8. Boîtier de capteur (2) selon l'une quelconque des revendications 1 à 7, dans lequel la membrane (11) forme conjointement avec au moins une section du corps de capteur (3) un élément de protection thermique (14), présentant par ailleurs :
une structure de support (17), dans lequel la tôle en métal (5) coopère avec la structure de support (17) au moyen de moyens de liaison (15) de préférence rigides en particulier fabriqués de manière additive ou au moyen d'un milieu de couplage (18) en particulier dans la zone de la membrane (11) .

9. Boîtier de capteur (2) selon la revendication 8, dans lequel la structure de support (17) est en contact avec le poinçon à membrane (4).

10. Boîtier de capteur (2) selon la revendication 8, dans lequel le corps de capteur et/ou le poinçon à membrane (4) sont appliqués sur la structure de support (17) par fabrication additive et sont reliés à la structure de support (5) par une liaison d'assemblage (9) par liaison de matière, en particulier plane, produite au cours de la fabrication additive.

11. Boîtier de capteur (2) selon l'une quelconque des revendications précédentes, dans lequel la tôle en métal (5) présente, dans zone de la membrane (11), des structures de membrane (19 - 19'') de thermoconduction et/ou de renfort en particulier fabriquées de manière additive, lesquelles sont reliées à la tôle en métal (5) par une liaison d'assemblage (9) par liaison de matière produite au cours de la fabrication additive.

12. Capteur de pression (1), destiné en particulier à être employé dans une chambre de combustion, ou capteur de force avec un boîtier de capteur (2) selon l'une quelconque des revendications précédentes et un convertisseur de pression (8), en particulier un élément de mesure piézoélectrique, dans lequel le convertisseur de pression (8) est disposé à l'intérieur du corps de capteur (3) et est mis au point pour convertir une pression/une force relevée par le poinçon à membrane (4) en un signal électrique.

13. Procédé de fabrication d'un boîtier de capteur (2) selon l'une quelconque des revendications 1 à 11, en particulier destiné à être employé dans une chambre de combustion, pour un capteur de force ou de pression (1), présentant des étapes suivantes :
- de fourniture d'une tôle en métal (5) ; et
- d'application d'un corps de capteur (3) et/ou d'au moins un poinçon à membrane (4) sur la tôle en métal (5) au moyen d'une fabrication additive, dans lequel la fabrication additive produit une liaison d'assemblage (9) par liaison de matière entre le corps de capteur (3) et/ou l'au moins un poinçon à membrane (4) d'une part et la tôle en métal (5) d'autre part.

14. Utilisation d'un dispositif de fabrication additive pour fabriquer un boîtier de capteur (2), en particulier destiné à être employé dans une chambre de combustion, d'un capteur de force ou de pression (1) selon l'une quelconque des revendications 1 à 11.
